# EUROPEAN PATENT APPLICATION

(11) **EP 4 250 651 A1**
(43) Date of publication of application: **27.09.2023**
(21) Application number: 21913868.2
(22) Date of filing: 13.12.2021
(51) Int. Cl.: H04L 12/66, H04L 45/74, H04L 61/256

(54) **METHOD FOR ACCESSING LOCAL AREA NETWORK SERVICE DEVICE, AND ELECTRONIC DEVICE**

(30) Priority: 31.12.2020 CN 202011638225
(71) Applicant: Huawei Technologies Co., Ltd., Shenzhen, Guangdong 518129 (CN)
(72) Inventor: DING, Bo, Shenzhen, Guangdong 518129 (CN); XU, Baojun, Shenzhen, Guangdong 518129 (CN); YU, Zongbao, Shenzhen, Guangdong 518129 (CN); YAO, Hongtao, Shenzhen, Guangdong 518129 (CN); TU, Feng, Shenzhen, Guangdong 518129 (CN)
(74) Representative: Goddar, Heinz J.
(86) International application number: PCT/CN2021/137525
(87) International publication number: WO 2022/143127

(57) **Abstract**

Embodiments of this application provide a method and an electronic device for accessing a service device in a local area network, and relate to the field of remote control technologies. According to the method, an electronic device in an external network mainly obtains an internal-network communication address in a local area network in which a service device is located, uses the internal-network communication address as a source address of an internal-network packet, uses the internal-network packet as a UDP packet payload of a layer 3 packet, and sends the layer 3 packet to a router through a P2P channel between the electronic device and the router, and then the router obtains the internal-network packet, and sends the internal-network packet to the service device through a LAN bridge between the router and the service device. According to the foregoing method, the electronic device in the external network can conveniently and efficiently perform remote access to or control on the service device in the local area network.

## Description

This application claims priority to Chinese Patent Application No. 202011638225.1, filed with the China National Intellectual Property Administration on December 31, 2020 and entitled "METHOD AND ELECTRONIC DEVICE FOR ACCESSING SERVICE DEVICE IN LOCAL AREA NETWORK", which is incorporated herein by reference in its entirety.

### TECHNICAL FIELD

This application relates to the field of remote control technologies, and in particular, to a method and a device for accessing a service device in a local area network.

### BACKGROUND

To cope with a challenge of exhaustion of internet protocol version 4 (internet protocol version 4, IPv4) addresses, network address translation (network address translation, NAT) devices are widely deployed in communication architectures. A relatively large quantity of private network addresses may be mapped to a relatively small quantity of public network addresses by using an address translation function of the NAT device, so that a problem of insufficient internet protocol addresses (Internet protocol address, IP) is alleviated. In addition, in a peer to peer (peer to peer, P2P) communication scenario, NAT also plays an important role. A P2P channel may be established between terminals in different networks by using a NAT traversal technology, so that the terminals can directly communicate with each other. In this way, a peer to peer latency is reduced, pressure on a server is greatly reduced, and costs of the server are reduced.

With development of the internet of things (Internet of things, IoT), there are increasing IoT service devices in a home network, increasing service devices are cascaded to customer premises equipment (customer premise equipment, CPE) (also referred to as a router), and there is also a growing need for remote access to these service devices. However, because applications of these service devices may not support cross-network communication, terminals cannot efficiently and conveniently access, based on the current NAT traversal technology, these devices cascaded to the router.

### SUMMARY

This application provides a method and an electronic device for accessing a service device in a local area network. A communication address of the electronic device in an internal network is used as a source address of an internal-network packet, and the internal-network packet is used as a payload part of a layer 3 packet, to resolve a problem that the electronic device in an external network cannot efficiently and directly access a service device in the internal network.

According to a first aspect, a method for accessing a service device in a local area network is provided. The method is applied to an electronic device. The electronic device is located in a first network, there is a P2P channel between the electronic device and a first router located in a second network, the P2P channel is used for communication between the electronic device and a first router, at least one service device is cascaded to the first router, and the method includes: sending a first request message to the first router, where the first request message is used to request a communication address of the electronic device in the second network; receiving a first feedback message sent by the first router, where the first feedback message is used to indicate the communication address of the electronic device in the second network; and accessing the at least one service device by using the communication address of the electronic device in the second network.

Optionally, the electronic device in this application may be a terminal that can interact with a user or a router.

Optionally, the second network in this application is a network in which the first router and the service device cascaded to the first router are located. The second network may be a local area network (also referred to as an internal network). The first network is a network in which the electronic device is located. The first network may also be a local area network, and the first network is different from the second network. Relative to the second network (the internal network), the first network may also be referred to as an external network.

The communication address may include an IP address (also referred to as an IP address) and a port number used for communication.

It should be understood that, that there may be a P2P channel between the electronic device in the first network and the first router in the second network, and the P2P channel is used for communication between the electronic device and the first router includes: in a process of accessing a service device in a local area network provided in this application, message transmission or packet transmission between the electronic device and the first router may be performed by using the P2P channel. For example, the electronic device may send the first request message to the first router through the P2P channel, and the first router may send the first feedback message to the first router through the P2P channel. Then the electronic device may send a first packet to the first router through the P2P channel.

According to the foregoing method, the electronic device in the external network obtains the internal-network communication address in the internal network, so that virtual networking in which the electronic device and the service device in the internal network can be located in a same network is implemented, and therefore the electronic device in the external network and the service device in the internal network communicate as if they are devices in a same network. In this way, the electronic device can efficiently and conveniently access or control the service device in the internal network.

With reference to the first aspect, in some implementations of the first aspect, the method further includes: the accessing, by the electronic device, the at least one service device by using the communication address of the electronic device in the second network includes: generating the first packet based on the communication address of the electronic device in the second network, where a first payload part of the first packet includes a second packet, a source address of the second packet is the communication address of the electronic device in the second network, and a destination address of the second packet is a communication address of the at least one service device; and sending the first packet to the first router.

According to the method for accessing a service device in a local area network provided in this application, the electronic device in the external network mainly obtains the internal-network address in the local area network in which the service device is located, uses the internal-network address as a source address of an internal-network packet, uses the internal-network packet as a UDP packet payload of a layer 3 packet, and sends the layer 3 packet to the router through the P2P channel between the electronic device and the router, and then the router obtains the internal-network packet, and sends the internal-network packet to the service device through a LAN bridge between the router and the service device.

According to the foregoing method, the electronic device in the external network can conveniently and efficiently perform remote access to or control on the service device in the local area network.

With reference to the first aspect, in some implementations of the first aspect, a source address of the first packet is a communication address of the electronic device in the first network, and a destination address of the first packet is a communication address of the first router in the second network.

With reference to the first aspect, in some implementations of the first aspect, a second payload part of the second packet includes service request data, the service request data is used to request a service from the at least one service device, and the method further includes: obtaining the service request data; generating the second packet based on the service request data; and encapsulating the second packet to generate the first packet.

It should be understood that both the source address and the destination address of the second packet are internal-network addresses in the second network, and the second packet is mainly used for transmission between devices in the second network (specifically, transmission from the first router to the service device). Therefore, the second packet may also be referred to as an internal-network packet.

According to the foregoing method, the internal-network packet is encapsulated into a layer 3 packet (the first packet) as a payload, so that the service request of the user can be efficiently transmitted to the service device, and therefore the service device can provide a corresponding service.

With reference to the first aspect, in some implementations of the first aspect, when the electronic device is a terminal used for interacting with the user, the obtaining the service request data specifically includes: receiving a service request operation input by the user; and obtaining the service request data based on the service request operation.

It should be understood that the terminal interacting with the user herein is a terminal that can directly accept a service request input by the user. For example, the terminal has a local application or a third-party application, so that the user can input a service request for the service device in the second network by using the application.

Optionally, when the electronic device is a terminal that can interact with the user, the terminal may receive the service request input by the user, obtain the service request data, and generate the first packet based on the service request data.

According to the foregoing method, the electronic device in the external network can conveniently and efficiently perform remote access to or control on the service device in the local area network.

With reference to the first aspect, in some implementations of the first aspect, when the electronic device is a second router, the receiving the service request data specifically includes: receiving the service request data sent by a terminal, where the terminal is used for interacting with the user.

Optionally, when the electronic device is a second router, a terminal may be cascaded to the second router, and the terminal may be a terminal that can directly interact with the user or can directly accept a service request input by the user.

When the electronic device is the second router, the second router may receive, by using the terminal, the service request data input by the user, and generate the first packet based on the service request data. In other words, in this case, the layer 3 packet is generated by the second router.

According to the foregoing method, the electronic device in the external network can conveniently and efficiently perform remote access to or control on the service device in the local area network.

With reference to the first aspect, in some implementations of the first aspect, the method further includes: receiving a communication address that is of the service device in the second network and that is added by the user to the electronic device.

With reference to the first aspect, in some implementations of the first aspect, the first network and the second network are local area networks, and the first network is different from the second network.

According to a second aspect, a method for accessing a service device in a local area network is provided. The method is applied to a first router. The first router is located in a second network, at least one service device is cascaded to the first router, there is a P2P channel between the first router and an electronic device located in a first network, the P2P channel is used for communication between the first router and the electronic device, and the method includes: receiving a first request message sent by the electronic device, where the first request message is used to request a communication address of the electronic device in the second network; assigning the communication address in the second network to the electronic device based on the first request message; and sending a first feedback message to the electronic device, where the first feedback message is used to indicate the communication address of the electronic device in the second network.

It should be understood that sending the first request message to the first router by the electronic device and sending the first feedback message to the electronic device by the first router may be performed by using the P2P channel between the electronic device and the first router.

The first request message in this application is used by the electronic device to request the first router to assign an internal-network address in the second network to the terminal. The internal-network address in the second network may be an internal-network IP address in the second network, or an internal-network IP address and an internal-network port number in the second network.

According to the foregoing method, the electronic device in the external network obtains the internal-network communication address in the internal network, so that virtual networking in which the electronic device and the service device in the internal network can be located in a same network is implemented, and therefore the electronic device in the external network and the service device in the internal network communicate as if they are devices in a same network. In this way, the electronic device can efficiently and conveniently access or control the service device in the internal network.

With reference to the second aspect, in some implementations of the second aspect, the method further includes: receiving a first packet sent by the electronic device, where a first payload part of the first packet includes a second packet, a source address of the second packet is the communication address of the electronic device in the second network, and a destination address of the second packet is a communication address of the at least one service device; decapsulating the first packet to obtain the second packet; and sending the second packet to the at least one service device based on the destination address of the second packet.

According to the method for accessing a service device in a local area network provided in this application, the electronic device in the external network mainly obtains the internal-network address in the local area network in which the service device is located, uses the internal-network address as a source address of an internal-network packet, uses the internal-network packet as a UDP packet payload of a layer 3 packet, and sends the layer 3 packet to the router through the P2P channel between the electronic device and the router, and then the router obtains the internal-network packet, and sends the internal-network packet to the service device through a LAN bridge between the router and the service device.

According to the foregoing method, the electronic device in the external network can conveniently and efficiently perform remote access to or control on the service device in the local area network.

With reference to the second aspect, in some implementations of the second aspect, a source address of the first packet is a communication address of the electronic device in the first network, and a destination address of the first packet is a communication address of the first router in the second network.

With reference to the second aspect, in some implementations of the second aspect, a second payload part of the second packet includes service request data, and the service request data is used to request a service from the at least one service device.

According to the foregoing method, the internal-network packet is encapsulated into a layer 3 packet (the first packet) as a payload, so that a service request of a user can be efficiently transmitted to the service device, and therefore the service device can provide a corresponding service.

With reference to the second aspect, in some implementations of the second aspect, the first network and the second network are local area networks, and the first network is different from the second network.

According to a third aspect, an electronic device for accessing a service device in a local area network is provided. The electronic device includes: one or more processors; one or more memories; one or more communication interfaces; and one or more computer programs, where the one or more programs are stored in the memory, and when the one or more programs are executed by the processor, the device is enabled to perform the following steps: sending a first request message to a first router, where the first request message is used to request a communication address of the electronic device in a second network; receiving a first feedback message sent by the first router, where the first feedback message is used to indicate the communication address of the electronic device in the second network; and accessing at least one service device by using the communication address of the electronic device in the second network.

With reference to the third aspect, in some implementations of the third aspect, when the one or more programs are executed by the processor, the device is enabled to perform the following steps: obtaining the communication address of the electronic device in the second network; generating a first packet based on the communication address of the electronic device in the second network, where a first payload part of the first packet includes a second packet, a source address of the second packet is the communication address of the electronic device in the second network, and a destination address of the second packet is a communication address of the at least one service device; and sending the first packet to the first router.

With reference to the third aspect, in some implementations of the third aspect, a source address of the first packet is a communication address of the electronic device in a first network, and a destination address of the first packet is a communication address of the first router in the second network.

With reference to the third aspect, in some implementations of the third aspect, a second payload part of the second packet includes service request data, the service request data is used to request a service from the at least one service device, and when the one or more programs are executed by the processor, the device is enabled to perform the following steps: obtaining the service request data; generating the second packet based on the service request data; and encapsulating the second packet to generate the first packet.

With reference to the third aspect, in some implementations of the third aspect, when the electronic device is a terminal used for interacting with a user, and the one or more programs are executed by the processor, the device is enabled to perform the following steps: receiving a service request operation input by the user; and obtaining the service request data based on the service request operation.

With reference to the third aspect, in some implementations of the third aspect, when the electronic device is a terminal used for interacting with the user, and the one or more programs are executed by the processor, the device is enabled to perform the following steps: receiving a communication address that is of the service device in the second network and that is added by the user to the electronic device.

With reference to the third aspect, in some implementations of the third aspect, when the electronic device is a second router, and the one or more programs are executed by the processor, the device is enabled to perform the following step: receiving the service request data sent by a terminal, where the terminal is used for interacting with the user.

According to a fourth aspect, a router for accessing a service device in a local area network is provided. The router includes: one or more processors; one or more memories; one or more communication interfaces; and one or more computer programs, where the one or more programs are stored in the memory, and when the one or more programs are executed by the processor, the router is enabled to perform the following steps: receiving a first request message sent by an electronic device, where the first request message is used to request a communication address of the electronic device in a second network; assigning the communication address in the second network to the electronic device based on the first request message; and sending a first feedback message to the electronic device, where the first feedback message is used to indicate the communication address of the electronic device in the second network.

With reference to the fourth aspect, in some implementations of the fourth aspect, when the one or more programs are executed by the processor, the router is enabled to perform the following steps: receiving a first packet sent by the electronic device, where a first payload part of the first packet includes a second packet, a source address of the second packet is the communication address of the electronic device in the second network, and a destination address of the second packet is a communication address of at least one service device in the second network; decapsulating the first packet to obtain the second packet; and sending the second packet to the at least one service device based on the destination address of the second packet.

With reference to the fourth aspect, in some implementations of the fourth aspect, a source address of the first packet is a communication address of the electronic device in a first network, and a destination address of the first packet is a communication address of the first router in the second network.

With reference to the fourth aspect, in some implementations of the fourth aspect, a second payload part of the second packet includes service request data, and the service request data is used to request a service from the at least one service device.

With reference to the fourth aspect, in some implementations of the fourth aspect, the first network and the second network are local area networks, and the first network is different from the second network.

According to a fifth aspect, a method for accessing a service device in a local area network is provided. The method is applied to a service device. The service device is a device cascaded to a first router, the service device and the first router are located in a second network, there is a P2P channel between the first router and an electronic device located in a first network, the P2P channel is used for communication between the electronic device and the first router, and the method includes: sending a first response message to the first router, where the first response message is used to indicate the service device to perform a target service operation; and sending, by the first router, the first response message to the electronic device.

With reference to the fifth aspect, in some implementations of the fifth aspect, a source address of the first response message packet sent by the service device to the first router is a communication address of the service device in the second network, and a destination address of the first response message packet sent by the service device to the first router is a communication address of the electronic device in the second network.

With reference to the fifth aspect, in some implementations of the fifth aspect, a source address of the first response message packet sent by the first router to the electronic device is the communication address of the service device in the second network, and a destination address of the first response message packet sent by the first router to the electronic device is a communication address of the electronic device in the first network.

According to a sixth aspect, a computer-readable storage medium is provided. The computer-readable storage medium stores a computer program, and when the computer program runs on a computer, the computer is enabled to implement the method according to any one of the implementations of the first aspect or the second aspect.

According to a seventh aspect, a computer product is provided. The computer product stores a computer program, and when the computer program runs on a computer, the computer is enabled to implement the method according to any one of the implementations of the first aspect or the second aspect.

According to an eighth aspect, a chip is provided. The chip includes a processor and a memory, the memory stores a computer program or instructions, and when the processor executes the computer program or the instructions, the method for accessing a service device in a local area network according to any one of the implementations of the first aspect or the second aspect is implemented.

According to a ninth aspect, a communication system for accessing a service device in a local area network is provided. The communication system includes an electronic device, a first router, and at least one service device cascaded to the first router. The electronic device is located in a first network, the first router and the at least one service device are located in a second network, there is a P2P channel between the electronic device and the first router, the P2P channel is used for communication between the electronic device and the first router, the electronic device is configured to perform the method according to any one of the implementations of the first aspect, and the first router is configured to perform the method according to any one of the implementations of the second aspect.

### BRIEF DESCRIPTION OF DRAWINGS

FIG. 1 is a schematic diagram of an architecture of a system in which a NAT technology is used for communication according to an embodiment of this application;
FIG. 2A and FIG. 2B are schematic diagrams of two system architectures according to an embodiment of this application;
FIG. 3A to FIG. 3G are schematic diagrams of GUIs on a mobile phone side in a process in which a user accesses a tablet computer in an internal network by using a mobile phone according to an embodiment of this application;
FIG. 4 is a schematic diagram of a P2P channel establishment process according to an embodiment of this application;
FIG. 5 is a schematic diagram of a multi-end interaction process in a system architecture shown in FIG. 2A according to an embodiment of this application;
FIG. 6 is a schematic diagram of structures of devices in the system architecture shown in FIG. 2A according to an embodiment of this application;
FIG. 7A and FIG. 7B are a schematic diagram of packet structures in a packet encapsulation and decapsulation process according to an embodiment of this application;
FIG. 8 is a schematic diagram of a packet format according to an embodiment of this application;
FIG. 9 is a schematic diagram of a multi-end interaction process in a system architecture shown in FIG. 2B according to an embodiment of this application;
FIG. 10 is a schematic diagram of software structures of devices in the system architecture shown in FIG. 2B according to an embodiment of this application;
FIG. 11A and FIG. 11B are a schematic diagram of packet structures in another packet encapsulation and decapsulation process according to an embodiment of this application;
FIG. 12 is a schematic diagram of a structure of an electronic device for accessing a service device in a local area network according to an embodiment of this application; and
FIG. 13 is a schematic diagram of a structure of a router for accessing a service device in a local area network according to an embodiment of this application.

### DESCRIPTION OF EMBODIMENTS

The following describes embodiments of this application with reference to the accompanying drawings in embodiments of this application.

It should be noted that terms used in implementations of embodiments of this application are only used to explain specific embodiments of this application, and are not intended to limit this application. In the descriptions of embodiments of this application, unless otherwise specified, "/" represents "or". For example, A/B may represent A or B. In this specification, "and/or" merely describes an association relationship between associated objects, and represents that three relationships may exist. For example, A and/or B may represent the following three cases: Only A exists, both A and B exist, and only B exists. In addition, in the descriptions of embodiments of this application, unless otherwise specified, "a plurality of" means two or more, and "at least one" and "one or more" mean one, two, or more.

In the following descriptions, terms "first" and "second" are used only for description purposes, and cannot be understood as an indication or an implication of relative importance or an implicit indication of a quantity of indicated technical features. Therefore, features limited by "first" and "second" may explicitly or implicitly include one or more such features.

Reference to "an embodiment", "some embodiments", or the like described in this specification means that specific features, structures, or characteristics described with reference to one or more embodiments are included in the embodiments of this application. Therefore, statements "in an embodiment", "in some embodiments", "in other embodiments", "in some other embodiments", and the like appearing in different parts of this specification do not necessarily refer to a same embodiment, but mean "one or more but not all embodiments", unless otherwise specified. The terms "include", "contain", "have", and variations thereof all mean "including but not limited to", unless otherwise specified.

The technical solutions in embodiments of this application may be applied to various communication systems, for example, a global system for mobile communications (global system of mobile communication, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WiMAX) communication system, a future 5th generation (5th generation, 5G) system, or a new radio (new radio, NR) system.

With development of internet of things technologies, users have more requirements on types of devices that support interconnection. For example, for some service devices located in a home network, if the service devices can be accessed by terminals in an external network, a user can remotely control the service devices to provide corresponding services, to obtain better experience. For example, when a user is on a business trip, the user may need to access a service device such as a computer or a printer in an internal network of a home or an office by using a mobile phone. Alternatively, when a user plays and takes a photo, to reduce storage space on a mobile phone, the user may need to transmit the photographed photo to a storage device at home in a timely manner. To implement such a case, an electronic device in an external network needs to be able to efficiently and conveniently access the service device in an internal network, so that the service device provides a corresponding service.

However, as described in the background, with wide deployment of NAT devices in a communication network, many service devices are currently deployed behind the NAT devices. Limited by working characteristics of the NAT devices, many service devices can only communicate with devices in a same network as the service devices, but cannot provide cross-network services. Consequently, requirements of users cannot be met. For better understanding of why the service device behind the NAT device cannot provide a cross-network service, the following first describes a working principle of the NAT device.

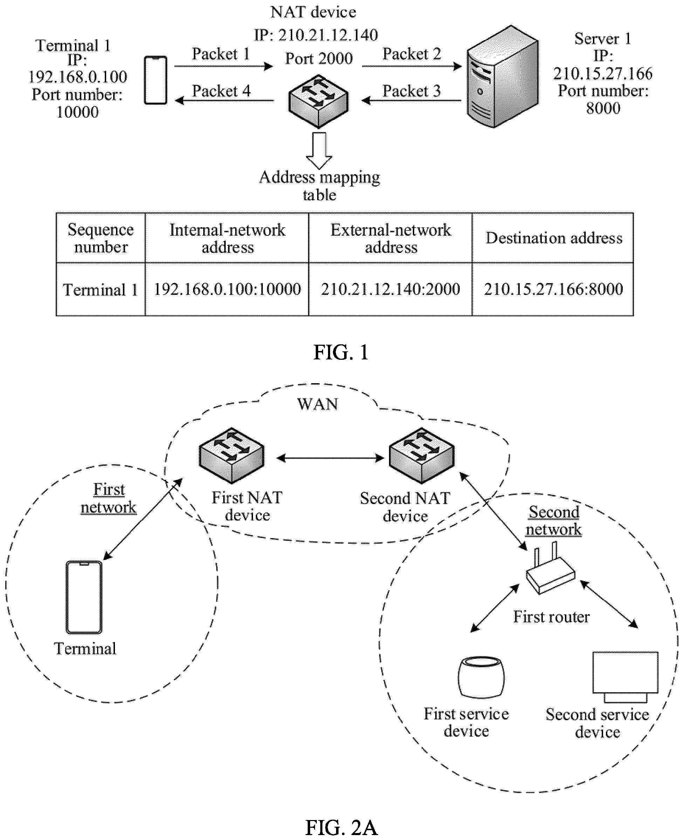

For example, FIG. 1 is a schematic diagram of an architecture of a system in which a NAT technology is used for communication.

In the system architecture shown in FIG. 1, it is assumed that a communication initiating end (a terminal 1) is located in a local area network (local area network, LAN) (also referred to as an internal network), and a communication destination end (a server 1) is located in a wide area network (wide area network, WAN) (also referred to as an external network or a public network). A NAT device is deployed in the external network, and the terminal 1 is located behind the NAT device.

As shown in FIG. 1, the NAT device is usually responsible for maintaining an address mapping table. The address mapping table records an internal-network address of the terminal 1, an external-network address of the terminal 1, and a destination address, and the mapping table is initially empty. The internal-network address of the terminal 1 may be used as a source address of the terminal 1 during communication, and includes an IP address and a port number of the terminal 1 in the internal network. For example, the source address is 192.168.0.100:10000. The external-network address is a wide area network address assigned by the NAT device to the terminal 1. There is a mapping relationship between the external-network address and the source address. The external-network address includes an IP address and a port number of the terminal 1 in the external network. For example, the external-network address is 210.21.12.140:2000. The destination address is an address of a destination end device with which the terminal 1 requests to communicate, and herein specifically refers to an IP address and a port number of the server 1 located in the external network. For example, the destination address is 210.15.27.166:8000.

With reference to the system architecture shown in FIG. 1, in an example in which the NAT device in FIG. 1 is a cone-shaped NAT device, a communication process between the terminal 1 and the server 1 may include the following steps.
(1) The terminal 1 generates a packet 1 that needs to be sent to the server 1, and sends the packet 1 to the NAT device. The packet 1 includes the source address 192.168.0.100:10000 of the terminal 1 and the destination address 210.15.27.166:8000. After receiving the packet 1, the NAT device obtains a record about the source address 192.168.0.100:10000 from the mapping table.

If the terminal 1 sends a packet to the server 1 for the first time, and the record about the source address 192.168.0.100:10000 is not created in the mapping table of the NAT device, the NAT device needs to create a new record about the source address 192.168.0.100:10000 in the mapping table and assign an external-network IP address and an external-network port. For example, the external-network IP and port number assigned by the NAT device to the terminal 1 are 210.21.12.140:2000.

It should be understood that an internet service provider (internet service provider, ISP) can assign an internal-network IP address and an internal-network port number to a terminal, and translate the internal-network IP address and port number of the terminal into an external-network IP address and port number by using the NAT device, so that the terminal can communicate in an external network (for example, the internet). For ease of description, in this embodiment of this application, the IP address and/or the port of the terminal in an internal network are/is collectively referred to as an internal-network address, and the IP address and/or the port of the terminal in the external network are/is collectively referred to as an external-network address.

(2) The NAT device modifies an internal-network address of the packet 1 to obtain a packet 2, and then sends the packet 2 to the external network. That the NAT device modifies the internal-network address of the packet 1 means that the source address in the packet 1 is modified to the external-network address, in other words, 192.168.0.100:10000 is modified to 210.21.12.140:2000. The packet 2 is a packet obtained after the address of the packet 1 is modified. In the packet 2, a source address is 210.21.12.140:2000, and a destination address is 210.15.27.166:8000.

After the foregoing process in which the terminal 1 sends the packet to the server 1, a mapping relationship between the internal-network address of the terminal 1, the external-network address of the terminal 1, and an address (namely, the destination address in the current communication process) of the server 1 is established on the NAT device. Therefore, when the terminal 1 sends a packet to the server 1 in the external network, the NAT device can modify the source address 192.168.0.100:10000 to the destination address 210.15.27.166:8000.

(3) The NAT device receives a packet 3 sent by the server 1 to the external-network address (210.21.12.140:2000) by using the address (210.15.27.166:8000) of the server 1. A source address of the packet 3 is 210.15.27.166:8000 (namely, the address corresponding to the server 1), and a destination address of the packet 3 is 210.21.12.140:2000 (namely, the external-network address corresponding to the terminal 1).

(4) After receiving the packet 3, the NAT device queries an address mapping table to learn that an internal-network address that has a mapping relationship with the external-network address 210.21.12.140:2000 is 192.168.0.100.10000. The NAT device modifies the current destination address of the packet 3 to obtain a packet 4, and sends the packet 4 to the terminal 1 in the internal network. That the NAT device modifies the current destination address of the packet 3 means that the NAT device modifies the external-network address (210.21.12.140:2000) of the packet 3 to the internal-network address (192.168.0.100.10000) to which the external-network address is mapped. The packet 4 is a packet obtained after the address of the packet 3 is modified. In the packet 4, a source address is 210.15.27.166:8000, and a destination address is 192.168.0.100.10000.

It can be learned from the foregoing process that the NAT device transmits a packet from the internal network to the external network, or transmits a packet from the external network to the internal network by modifying a source address or a destination address of the packet. A working principle of the NAT device can be summarized as follows: An external-network device can send data to an internal-network device only when the internal-network device actively sends data to the external-network device. The reason is as follows: If the internal-network device does not send a packet to the external-network device first, the NAT device does not store a mapping relationship between the internal-network device and an address of the external-network device. In this case, even if the NAT device receives a packet sent by the external-network device, the NAT device cannot successfully transmit the packet to the internal network.

With reference to the working principle of the NAT device described above, it can be learned that if an electronic device outside a local area network wants to access a service device in the local area network, the service device needs to first send data to the electronic device in the external network. However, in an actual application, the service device in the local area network usually does not actively send data to the electronic device in the external network. As a result, the electronic device in the external network cannot successfully access the service device in the local area network, and therefore cannot control the service device to provide a corresponding service.

To resolve the foregoing problem, embodiments of this application provide a method for accessing a service device in a local area network. An electronic device outside a local area network obtains an internal-network address assigned by a router in the local area network to the electronic device, and uses the internal-network address as a source address of an internal-network packet when the electronic device communicates with a service device in the local area network, so that the electronic device in an external network and the service device communicate as if they are in a same internal network. Therefore, the electronic device in the external network can efficiently and conveniently access or control the service device in the local area network.

In some examples, the electronic device in embodiments of this application may be a terminal that can directly interact with a user, or may be a router. For example, the terminal may be a mobile phone, a tablet computer, a wearable device (for example, a smart watch, a smart band, smart glasses, or smart jewelry), a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or another electronic device. A specific type of the terminal is not limited in embodiments of this application. In an example embodiment, the electronic device or the service device includes a terminal running an operating system such as IOS^{®} or Android^{®}. In some examples, the terminal or the service device in embodiments of this application may be an electronic device that supports a server messages block (Samba, SMB) protocol (which may be denoted as a Samba device below), a file transfer protocol (file transfer protocol, FTP), or a hypertext transfer protocol (hypertext transfer protocol, HTTP). For example, the service device may be an electronic device such as a personal computer, a tablet computer, or a printer. A specific type of the service device is not limited in embodiments of this application.

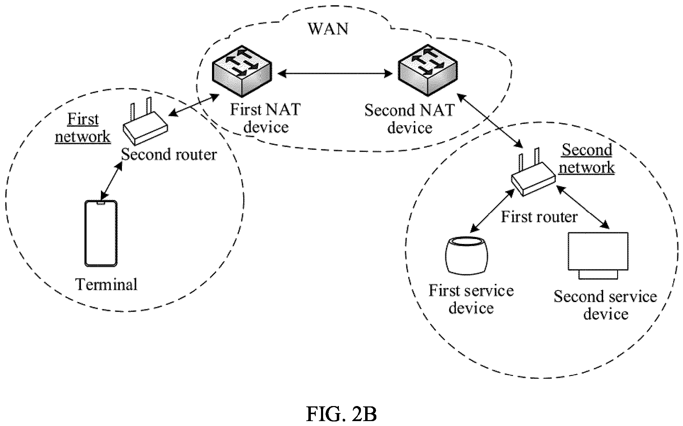

FIG. 2A and FIG. 2B are schematic diagrams of two example system architectures according to an embodiment of this application.

In an embodiment, FIG. 2A is a schematic diagram of a system architecture according to an embodiment of this application. The system architecture includes a terminal, a first NAT device, a second NAT device, a first router, and at least one service device (for example, a first service device and a second service device) cascaded to the first router. The terminal is located in a first network, and the terminal is located behind the first NAT device. The first router and the service device are located in a second network, and the first router and the service device are located behind the second NAT device. The first NAT device and the second NAT device may be located in a WAN. It should be understood that the method for accessing a service device in a local area network provided in embodiments of this application may be applied to a scenario in which a terminal performs cross-network access to a service device in a local area network. More specifically, the method may be applied to a scenario in which a terminal in a local area network behind a NAT device accesses a service device in another local area network behind another NAT device. Therefore, in some embodiments, the first network and the second network in FIG. 2A may be local area networks deployed in a place such as a home or an office, and the first network and the second network are different local area networks.

In another embodiment, the method for accessing a service device in a local area network provided in this application may be further applied to a scenario in which a router performs cross-network access to a service device in a local area network. In this case, the electronic device in the external network is the router. FIG. 2B is a schematic diagram of another system architecture according to an embodiment of this application. Compared with the system architecture shown in FIG. 2A, a terminal in FIG. 2B is a device cascaded to a second router. For ease of description, a same name is used herein for a device or a network in FIG. 2B that corresponds to FIG. 2A. However, it should be understood that in an actual application, networks and devices (for example, terminals and routers) in FIG. 2A and FIG. 2B may be different.

In the system architecture shown in FIG. 2B, the terminal and the second router are located in a first network, and the terminal and the second router are located behind a first NAT device. A first router and at least one service device (for example, a first service device and a second service device) cascaded to the first router are located in a second network, and the first router and the service device are located behind a second NAT device.

In some examples, the NAT device and the router in this embodiment of this application may be a same device, and the device may be, for example, a router that has functions of both a NAT device and a router. This is not limited in this application.

In some embodiments, there may be a plurality of terminals in FIG. 2A and a plurality of terminals cascaded to the second router in FIG. 2B. In this case, different users can separately remotely access or control service devices in a local area network by using respective terminals. In other words, the method for accessing a service device in a local area network provided in embodiments of this application may be applicable when an electronic device in one external network accesses/controls a service device in one local area network, or may be applicable when terminals in a plurality of external networks access/control service devices in one local area network, or may be applicable when an electronic device in one external network accesses/controls service devices in a plurality of local area networks.

It should be understood that quantities of service devices shown in FIG. 2A and FIG. 2B are merely examples. In some examples, there may be more or fewer service devices than those shown in FIG. 2A and FIG. 2B. This is not limited in this application.

For ease of description, in this application, a network (for example, a local area network deployed at home or in an office) in which a service device is located is referred to as an internal network, and a network in which an electronic device (a terminal or a second router) is located is referred to as an external network.

According to the method for accessing a service device in a local area network provided in embodiments of this application, a user can remotely control the service device in the internal network. For ease of understanding, the following embodiments of this application specifically describe, by using an example in which the terminal in FIG. 2A or FIG. 2B is a mobile phone and with reference to the accompanying drawings and specific application scenarios, the method for accessing a service device in a local area network provided in embodiments of this application.

For example, a scenario in which a user remotely accesses a tablet computer in an internal network of a home and transmits a photographed photo to the tablet computer is used as an example herein to briefly describe a process in which the user accesses the service device in the internal network by using an application (Application, APP) in the terminal.

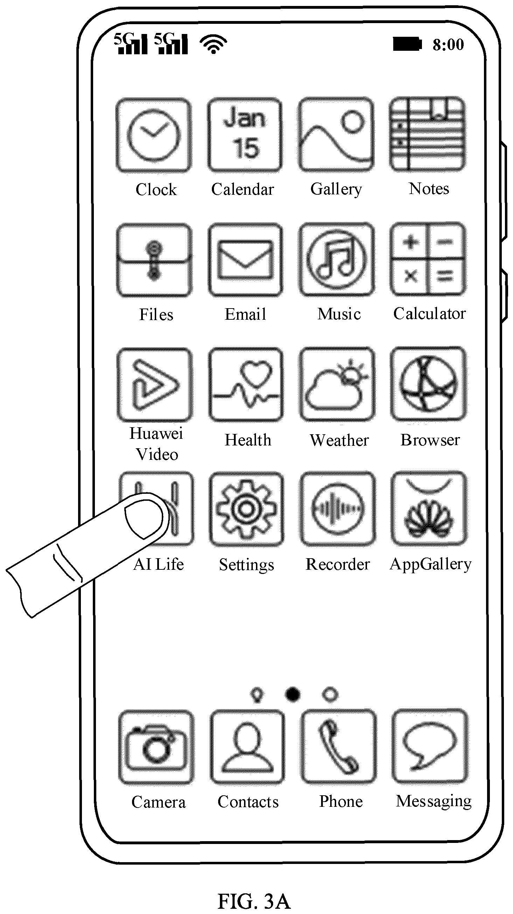

FIG. 3A to FIG. 3G are schematic diagrams of graphical user interfaces (graphical user interface, GUI) on a mobile phone side in a process in which a user accesses a tablet computer in an internal network by using a mobile phone according to an embodiment of this application.

FIG. 3A shows interface content currently output by the mobile phone in an unlocked mode. The interface content includes a plurality of applications (Application, APP) such as Clock, Calendar, Gallery, Notes, Files, Email, Music, Calculator, Huawei Video, Health, Weather, Browser, AI Life, Settings, Recorder, AppGallery, Camera, Contacts, Phone, and Messaging. It should be understood that in some embodiments, the interface may include more or fewer applications than those shown in FIG. 3A. This is not limited in this embodiment of this application.

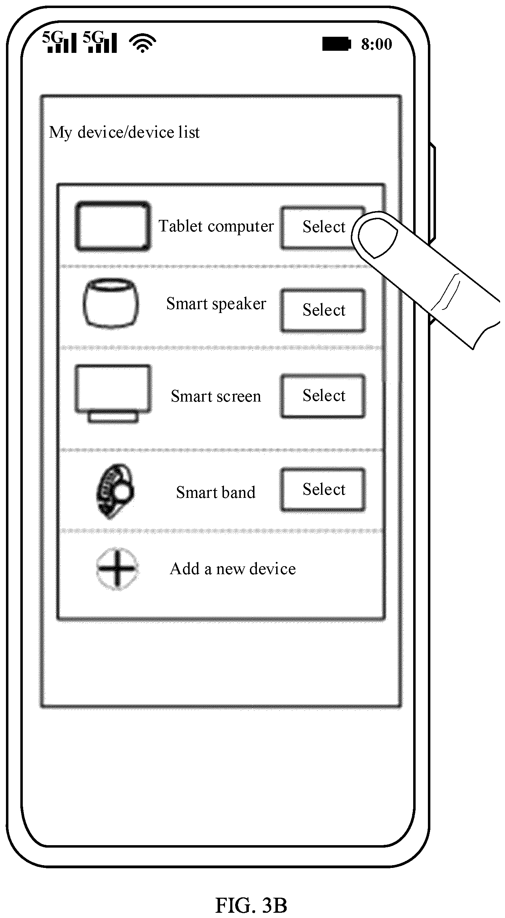

As shown in FIG. 3A, the user taps an icon of the AI Life APP, and in response to the tap operation of the user, the mobile phone runs the AI Life APP, and displays an interface shown in FIG. 3B. The interface in FIG. 3B is a My device/device list interface, and the device list interface may include icons of service devices such as a tablet computer, a smart speaker, a smart screen, and a smart band, corresponding Select icons after the devices, and an Add a new service device icon. For example, the service devices in the device list may be devices currently located in an internal network of a home. Optionally, the service devices may be manually added by the user in advance. For example, the user taps the Add a new service device icon in the device list interface of the AI Life APP, and then inputs information such as a name and a communication address (an IP address in the internal network of the home) of a new device to add the device to the device list. Alternatively, the service devices may be automatically added by the mobile phone in advance. For example, when the mobile phone is located in an internal network in which a service device is located, the mobile phone may scan and discover a surrounding service device, establish a connection to the service device, and store information about the service device.

As shown in FIG. 3B, when the user needs to access the tablet computer in the internal network of the home, the user taps a Select icon corresponding to the tablet computer. In response to the tap operation of the user, the mobile phone may establish a communication connection to a router (for example, the first router in FIG. 2A or FIG. 2B) in the home network. Optionally, the user may further set an access password for each device in advance. After the Select icon is tapped, an interface (not shown in FIG. 3B) for inputting a password or drawing a password gesture may be displayed. The mobile phone establishes communication with the tablet computer only after the user inputs a correct password or draws a correct gesture.

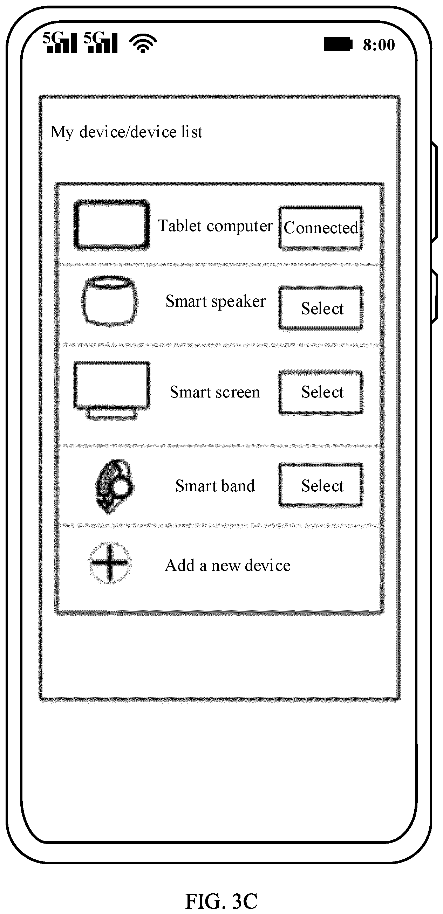

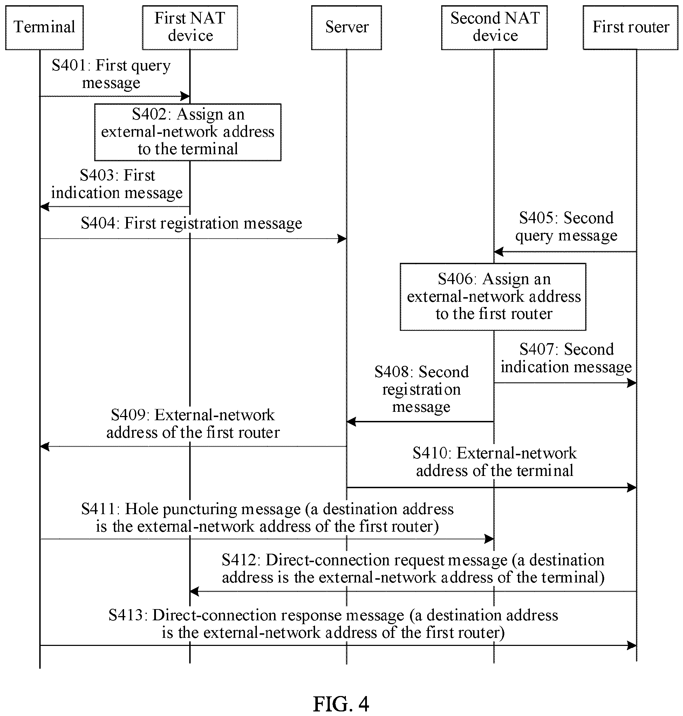

For example, a process of establishing a communication connection between the mobile phone and the router in the home network may correspond to S401 to S413 in FIG. 4, namely, a process of establishing a P2P channel between the mobile phone and the router in the home network. The P2P channel may be used as a P2P layer 3 proxy forwarding channel between the mobile phone and the router. After the P2P channel is established between the mobile phone and the router, the mobile phone and the service device (including the tablet computer connected to the router) cascaded to the router may communicate like internal-network devices. After the P2P layer 3 proxy forwarding channel (for example, the P2P channel established between the terminal and the router shown in FIG. 4) is established between the mobile phone and the router, a "connected" state may be displayed on the mobile phone. As shown in FIG. 3C, in this case, the Select icon corresponding to the tablet computer icon may be displayed in a "connected" state.

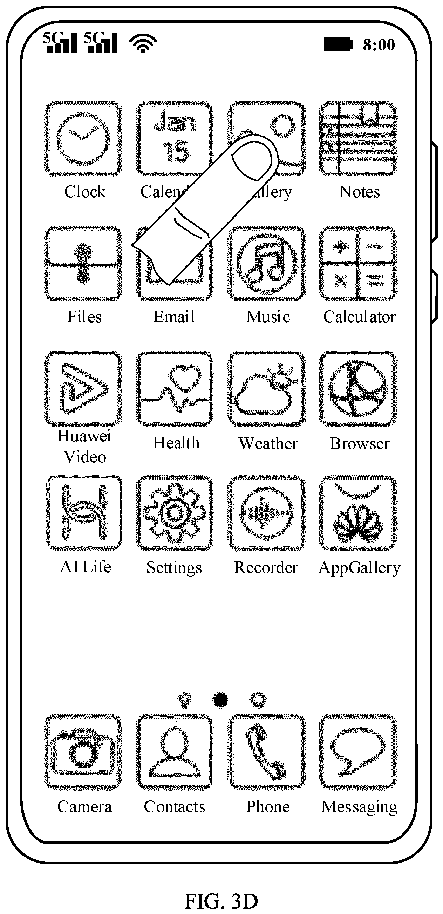

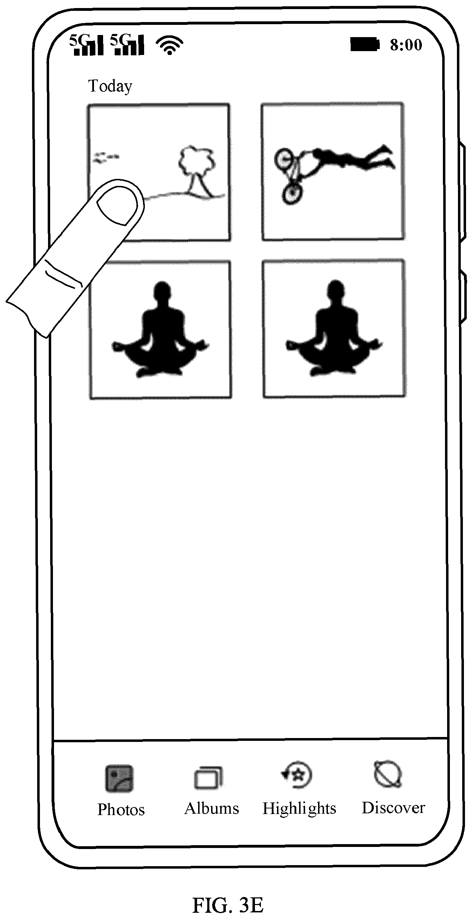

Then the user may exit the AI Life APP, and return to an unlocked output interface of the mobile phone. As shown in FIG. 3D, the user taps an icon of Gallery to open the Gallery application. In response to the Gallery opening operation of the user, the mobile phone runs the Gallery APP, and displays a Gallery interface shown in FIG. 3E. The user selects, in the Gallery interface, a photo that needs to be transmitted. For example, the user may touch and hold, with a finger, a photo that needs to be transmitted, and a check box is displayed in a lower right corner of each photo in a current album.

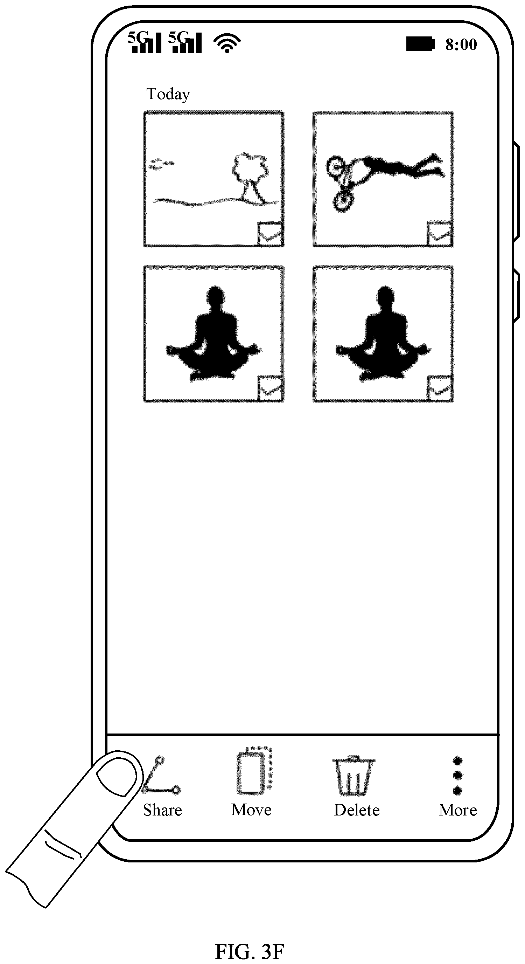

Then the user may tap a check box of another photo that needs to be transmitted. In response to the operation of selecting the photo by the user, the mobile phone may display an interface shown in FIG. 3F. The interface includes the photo (a photo in which √ is displayed in a check box) selected by the user and functions of "share", "move", "delete", and "more" for the photo.

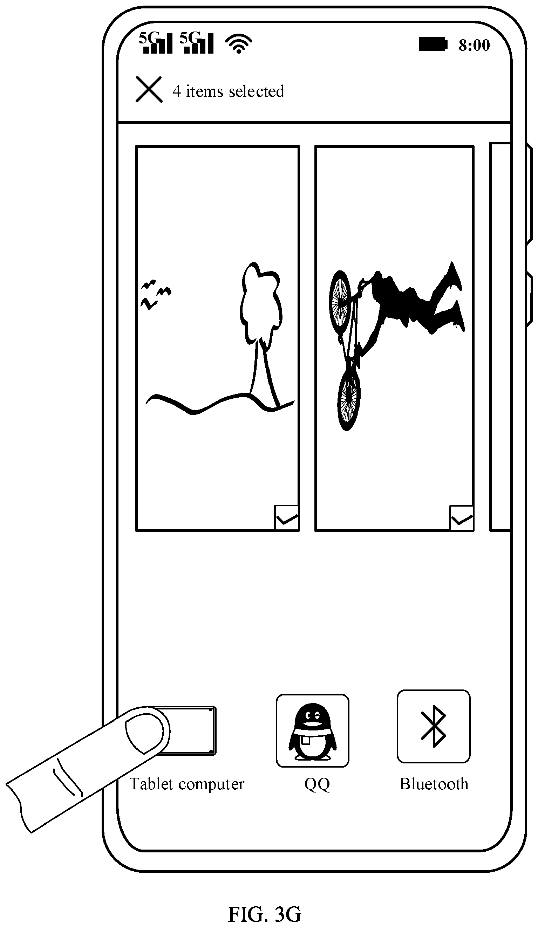

Then the user may tap a Share icon below the album. In response to the tap operation of the user, the mobile phone displays a photo sharing interface shown in FIG. 3G. The photo sharing interface includes a quantity (for example, 4 items selected) of photos selected by the user, images of all or some of the selected photos, and a device with which the photo is shared or a manner of sharing the photo. In the figure, "Tablet computer", "QQ", and "Bluetooth" are included. It should be noted that because the mobile phone has previously established a communication connection to the router connected to the tablet computer, the option icon of "Tablet computer" may be displayed in the photo sharing interface. Therefore, as shown in FIG. 3G, the user may tap an icon of the tablet computer, and in response to the tap operation of the user, the mobile pho phone may send the selected photo to the tablet computer in the internal network of the home.

Optionally, after receiving the photo, the tablet computer in the home network group may store the photo in Gallery of the tablet computer or another preset storage location based on a preset setting.

It should be understood that FIG. 3A to FIG. 3G are merely example diagrams of graphical user interfaces. In some embodiments, the graphical user interface may alternatively be presented in another manner. This is not limited in this application.

According to the method for accessing a service device in a local area network provided in embodiments of this application, the terminal may directly access or control the service device in the internal network by using a network outside the local area network, so that the user can efficiently and conveniently obtain a corresponding service, thereby improving user experience.

With reference to the system architectures shown in FIG. 2A and FIG. 2B, the following describes a specific implementation of accessing a service device in a local area network provided in embodiments of this application.

It should be understood that in the method for accessing a service device in a local area network provided in embodiments of this application, a device in an external network may communicate with a router in a peer network on an established P2P channel. Therefore, to more clearly describe the method for accessing a service device in a local area network provided in embodiments of this application, the following describes the method in two phases.

Phase 1: The device in the external network establishes a P2P channel with the router in the internal network.

It should be noted that a process of Phase 1 may be used as an initialization process, and the P2P channel establishment process in this phase may be implemented by using an existing procedure. Based on the system architecture (the electronic device in the external network is a terminal) shown in FIG. 2A, only a possible implementation is selected for example description herein. However, in an actual application, a manner of establishing the P2P channel is not limited thereto.

FIG. 4 is a schematic diagram of a P2P channel establishment process.

A first NAT device and a second NAT device in FIG. 4 may respectively correspond to the first NAT device and the second NAT device in FIG. 2A. For ease of understanding, an example in which both the first NAT device and the second NAT device are cone-shaped NAT devices is used for description herein. The P2P communication establishment process may include the following steps.

S401: The terminal sends a first query message to the first NAT device.

The first query message is used to query the first NAT device for an external-network address corresponding to the terminal.

S402: The first NAT device assigns the external-network address to the terminal.

In some examples, after the first NAT device receives the first query message, if the terminal does not have a corresponding external-network address, the first NAT device assigns the external-network address to the terminal. Specifically, the first NAT device may create a mapping relationship between an internal-network address and the external-network address of the terminal in a local address mapping table.

S403: The first NAT device sends a first indication message to the terminal.

Optionally, the first NAT device sends the first indication message to the terminal in response to the first query message. The first indication message is used to indicate, to the terminal, the external-network address corresponding to the terminal.

S404: The terminal sends a first registration message to a server.

The first registration message may include the external-network address assigned by the first NAT device to the terminal.

Specifically, the terminal may send the first registration message to the server by using the first NAT device.

In some examples, the server may learn, based on the first registration message, of the external-network address corresponding to the terminal. The server may store the external-network address of the terminal in local storage space.

It should be understood that the server learns of the external-network address of the terminal through step S401 to step S404.

S405: A first router sends a second query message to the second NAT device.

The second query message is used to query the server for an external-network address corresponding to the router.

S406: The second NAT device assigns the external-network address to the first router.

S407: The second NAT device sends a second indication message to the first router.

Optionally, the second NAT device sends the second indication message to the first router in response to the second query message. The second indication message is used to indicate, to the first router, the external-network address corresponding to the first router.

S408: The first router sends a second registration message to the server.

The second registration message includes the external-network address assigned by the second NAT device to the first router.

In some examples, the server may learn, based on the second registration message, of the external-network address corresponding to the first router. The server may store the external-network address of the first router in the local storage space.

It should be understood that the server learns of the external-network address of the first router through step S405 to step S408.

S409: The server sends the external-network address of the first router to the terminal.

S410: The server sends the external-network address of the terminal to the first router.

It should be understood that in step S409 and step S410, the terminal and the first router separately learn of the external-network addresses of the communication peer ends, and the external-network addresses may be used as destination addresses for subsequent communication between the terminal and the first router.

S411: The terminal sends a hole punching message to the second NAT device.

A destination address of the hole puncturing message may be the external-network address of the first router. The hole punching message is mainly used to establish a mapping relationship between the external-network address of the first router, the internal-network address of the terminal, and the external-network address of the terminal on the first NAT device.

It should be understood that if the first NAT device does not store the mapping relationship corresponding to the external-network address of the first router, a message sent from the external-network address of the first router is considered as an "unsolicited" message and cannot be sent to the terminal. Therefore, to enable a message sent by the first router to traverse the first NAT device and be sent to the terminal, the mapping relationship between the external-network address of the first router, the external-network address of the terminal, and the internal-network address of the terminal needs to be added to the first NAT device.

S412: The first router sends a direct-connection request message to the first NAT device, where a destination address of the direct-connection request message is the external-network address of the terminal.

This step is used by the first router to attempt to establish a P2P channel between the first router and the terminal. The direct-connection request message is used to request to establish a communication connection to the terminal.

It should be understood that when the second NAT device sends the direct-connection request message for the terminal, the second NAT device adds a mapping relationship between an internal-network address of the first router, the external-network address of the first router, and the destination address (the external-network address corresponding to the terminal) to the address mapping table. In step S411, the address mapping table in the first NAT device already has the mapping relationship corresponding to the external-network address of the first router. Therefore, in this step, after receiving the direct-connection request message sent from the external-network address of the first router, the first NAT device learns, from the address mapping table based on the destination address (the external-network address corresponding to the terminal) carried in the direct-connection request message, that an internal-network address corresponding to the destination address is the internal-network address of the terminal, and therefore the first NAT device may send the direct-connection request message to the terminal.

S413: The terminal sends a direct-connection response message to the first router, where a destination address of the direct-connection response message is the external-network address of the first router.

In step S412, when the first router sends the direct-connection request message to the external-network address of the terminal by using the second NAT device, the address mapping table in the second NAT device already has the mapping relationship between the internal-network address of the first router, the external-network address of the first router, and the destination address (the external-network address of the terminal). Therefore, the second NAT device sends the direct-connection response message to the first router based on the address mapping table. Therefore, NAT traversal is implemented between the terminal and the first router, and the P2P channel is successfully established.

It should be understood that the foregoing P2P channel establishment process is merely described by using a cone-shaped NAT device-cone-shaped NAT device combination as an example. In an actual application, the P2P channel may be established in a plurality of other implementations based on a STUN protocol and a TRUN protocol. This is not limited in this application.

It should be further understood that when the terminal and the router communicate on the P2P channel, the terminal and the router may send data packets according to a user datagram protocol (user data protocol, UDP). For a specific format of the data packet, refer to an existing related protocol. Details are not described in this application.

According to the foregoing method, NAT traversal is performed between the terminal and the router to obtain the P2P channel, the terminal and the router can directly communicate on the P2P channel, and a communication path does not need to pass through the server, so that communication between the terminal and the router is more convenient and efficient.

It should be understood that the P2P channel in the embodiment shown in FIG. 4 may be specifically used by the electronic device in the first network to communicate with the first router in the second network. In other words, in the process of accessing a service device in a local area network provided in embodiments of this application, message transmission or packet transmission between the electronic device and the first router may be performed by using the P2P channel. For example, the electronic device may send a first request message to the first router through the P2P channel, and the first router may send a first feedback message to the first router through the P2P channel. Then the electronic device may send a first packet to the first router through the P2P channel.

Phase 2: The device in the external network performs cross-network access to a service device cascaded to the router in the local area network, so that the service device provides a service.

After the P2P channel is established between the device in the external network and the router, Phase 2 is entered. Communication between the device in the external network and the router in the internal network in Phase 2 may be performed by using the P2P channel established in Phase 1. The following separately describes a process of Phase 2 with respect to the system architecture shown in FIG. 2A and the system architecture shown in FIG. 2B.

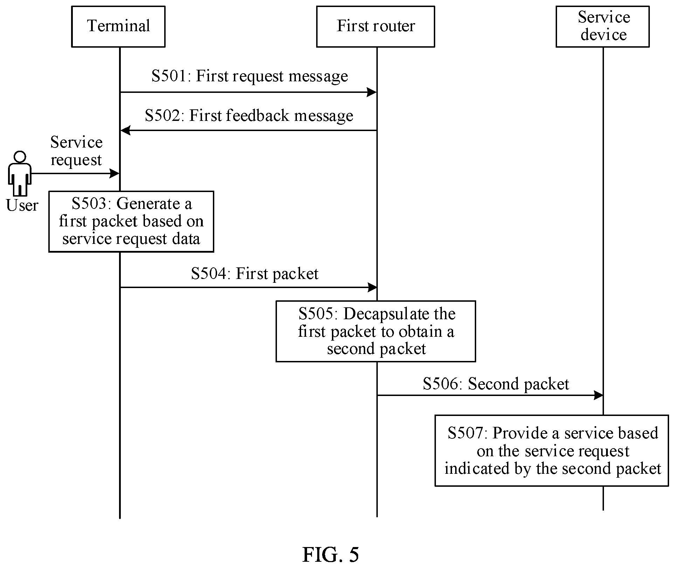

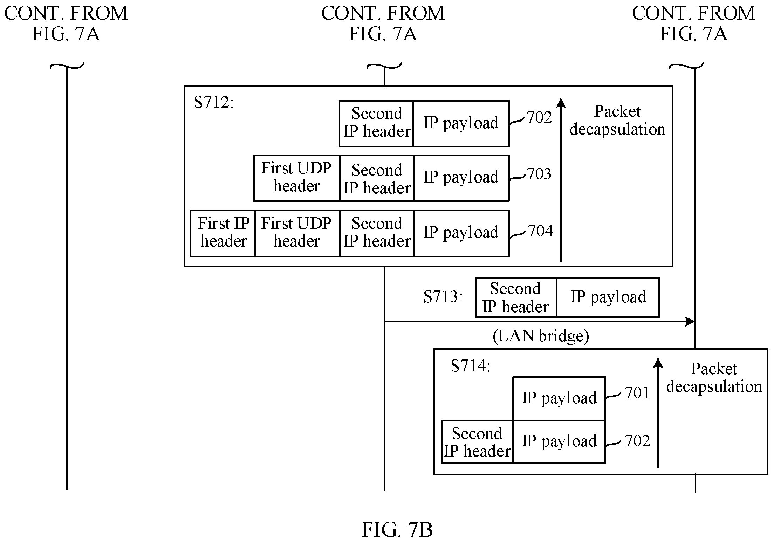

For example, the process of Phase 2 performed based on the system architecture in FIG. 2A is first described with reference to FIG. 5 to FIG. 7A and FIG. 7B. FIG. 5 is a schematic diagram of a multi-end interaction process in the system architecture shown in FIG. 2A. In the embodiment of FIG. 5, a terminal is located in a first network, and a first router and a service device are located in a second network. The process may specifically include the following steps.

S501: The terminal sends a first request message to the first router.

The first request message is used to request an internal-network address in the second network from the first router. The internal-network address in the second network may be an internal-network IP address in the second network, or an internal-network IP address in the second network and an internal-network port number in the second network.

With reference to the system architecture shown in FIG. 2A, for clearer understanding of specific content of the first request message packet in different phases in which the terminal sends the first request to the first router, refer to Table 1. Table 1 shows specific content of a 5-tuple of the first request message packet and body data content of a packet payload part of the first request message packet in step S501.

In some embodiments, the terminal first sends a first request message to a first NAT device. Specific content of a 5-tuple (a source IP address, a destination IP address, a source port number, a destination port number, and a transport layer protocol) of the first request message packet sent by the terminal to the first NAT device may be as follows: The source IP address is an internal-network IP address of the terminal in the first network, the destination IP address is an external-network IP address corresponding to the first router, the source port number is an internal-network port number of the terminal in the first network, the destination port number is an external-network port number corresponding to the first router, and the transport layer protocol is a UDP protocol (refer to content of the first request message packet in a phase from the terminal to the first NAT device shown in Table 1).

**Table 1**

| Different packet transmission phases and packets | IP header | UDP header | Packet payload |
|---|---|---|---|
| Content of a first request message packet in a phase from a terminal to a first NAT device | **Source IP address:** Internal-network IP address of the terminal in a first network | **Source port number:** Internal-network port number of the terminal in the first network | Body data: Request data for requesting the first router to assign an internal-network address in a second network |
| | **Destination IP address:** External-network IP address corresponding to a first router | | |
| | | **Destination port number:** External-network port number corresponding to the first router | |
| | **Transport layer protocol:** Identifier of a UDP protocol | | |
| Content of a first request message packet in a phase from the first NAT device to a second NAT device | **Source IP address:** External-network IP address corresponding to the terminal | **Source port number:** External-network port number corresponding to the terminal | Body data: Request data for requesting the first router to assign the internal-network address in the second network |
| | **Destination IP address:** External-network IP address corresponding to the first router | | |
| | | **Destination port number:** External-network port number corresponding to the first router | |
| | **Transport layer protocol:** Identifier of the UDP protocol | | |
| Content of a first request message packet in a phase from the second NAT device to the first router | **Source IP address:** External-network IP address corresponding to the terminal | **Source port number:** External-network port number corresponding to the terminal | Body data: Request data for requesting the first router to assign the internal-network address in the second network |
| | **Destination IP address:** Internal-network IP address of the first router in the second network | | |
| | | **Destination port number:** Internal-network port number of the first router in the second network | |
| | **Transport layer protocol:** Identifier of the UDP protocol | | |

In some embodiments, after receiving the first request message packet, the first NAT device modifies a source address (the source IP address and the source port number) of the first request message packet. Specifically, the first NAT device modifies the source IP address from the internal-network IP address of the terminal in the first network to an external-network IP address corresponding to the terminal, and modifies the source port number from the source port number of the terminal in the first network to an external-network port number corresponding to the terminal.

Then the first NAT device may send a modified first request message packet to a second NAT device. In this case, specific content of a 5-tuple of the first request message packet may be as follows: A source IP address is the external-network IP address corresponding to the terminal, a destination IP address is the external-network IP address corresponding to the first router, a source port number is the external-network port number corresponding to the terminal, a destination port number is the external-network port number corresponding to the first router, and a transport layer protocol is the UDP protocol (refer to content of the first request message packet in a phase from the first NAT device to the second NAT device in Table 1).

In some embodiments, after receiving the first request message packet sent by the first NAT device, the second NAT device modifies a destination address (the destination IP address and the destination port number) of the first request message packet. Specifically, the second NAT device modifies the destination IP address from the external-network IP address corresponding to the first router to an internal-network IP address of the first router in the second network, and modifies the destination port number from the external-network port number corresponding to the first router to an internal-network port number of the first router in the second network (refer to content of the first request message packet in a phase from the second NAT device to the first router in Table 1).

Then the second NAT device sends a first request message packet obtained after modification by the second NAT device to the first router located in the second network.

It should be understood that only the system architecture shown in FIG. 2A is used as an example for the packet content changes shown in this embodiment. In some embodiments, if there is a further device (for example, a NAT device) between the terminal and the first router, content (a source address or a destination address) of the packet changes accordingly. This is not limited in this application.

In some embodiments, the terminal may generate the first request message by using a P2P L3 proxy client (P2P L3 proxy client) module in the terminal, and send the first request message to a P2P L3 proxy service (P2P L3 proxy service) module in the first router through a P2P channel between the terminal and the first router.

In some embodiments, the first router assigns the corresponding internal-network address in the second network to the terminal based on the first request message.

S502: The first router sends a first feedback message to the terminal.

The first feedback message is used to indicate the internal-network address of the terminal in the second network, and the internal-network address in the second network is the internal-network address assigned by the first router to the terminal in the second network.

With reference to the system architecture shown in FIG. 2A, for clearer understanding of specific content of different parts of the first feedback message packet in different phases in which the first router sends the first feedback message to the terminal, refer to Table 2. Table 2 shows specific content of a 5-tuple of the first feedback message packet and body data content of a packet payload of the first feedback message packet in step S502.

**Table 2**

| Different packet transmission phases and packets | IP header | UDP header | Packet payload |
|---|---|---|---|
| Content of a first feedback message packet in a phase from a first router to a second NAT device | **Source IP address:** Internal-network IP address of the first router in a second network | **Source port number:** Internal-network port number of the first router in the second network | Body data: Internal-network address that is in the second network and that is assigned by the first router to the terminal |
| | **Destination IP address:** External-network IP address corresponding to a terminal | | |
| | | **Destination port number:** External-network port number corresponding to the terminal | |
| | **Transport layer protocol:** Identifier of a UDP protocol | | |
| Content of a first feedback message packet in a phase from the second NAT device to a first NAT device | **Source IP address:** External-network IP address corresponding to the first router | **Source port number:** Externa -network port number corresponding to the first router | Body data: Internal-network address that is in the second network and that is assigned by the first router to the terminal |
| | **Destination IP address:** External-network IP address corresponding to the terminal | | |
| | | **Destination port number:** External-network port number corresponding to the terminal | |
| | **Transport layer protocol:** Identifier of the UDP protocol | | |
| Content of a first feedback message packet in a phase from the first NAT device to the terminal | **Source IP address:** External-network IP address corresponding to the first router | **Source port number:** Externa -network port number corresponding to the first router | Body data: Internal-network address that is in the second network and that is assigned by the first router to the terminal |
| | **Destination IP address:** Internal-network IP address of the terminal in a first network | | |
| | | **Destination port number:** Internal-network port number of the terminal in the first network | |
| | **Transport layer protocol:** Identifier of the UDP protocol | | |

In some embodiments, the first router first sends a first feedback message to the second NAT device. Specific content of a 5-tuple of the first feedback message packet sent by the first router to the second NAT device may be as follows: A source IP address is the internal-network IP address of the first router in the second network, a destination IP address is the external-network IP address corresponding to the terminal, a source port number is the internal-network port number of the first router in the second network, a destination port number is the external-network port number corresponding to the terminal, and a transport layer protocol is the UDP protocol (refer to content of the first feedback message packet in a phase from the first router to the second NAT device in Table 2).

In some embodiments, after receiving the first feedback message packet, the second NAT device modifies a source address (the source IP address and the source port number) of the first feedback message packet. Specifically, the second NAT device modifies the source IP address from the internal-network IP address of the first router in the second network to the external-network IP address corresponding to the first router, and modifies the source port number from the source port number of the first router in the second network to the external-network port number corresponding to the first router.

Then the second NAT device may send a modified first feedback message packet to the first NAT device. In this case, specific content of a 5-tuple of the first feedback message packet may be as follows: A source IP address is the external-network IP address corresponding to the first router, a destination IP address is the external-network IP address corresponding to the terminal, a source port number is the external-network port number corresponding to the first router, a destination port number is the external-network port number corresponding to the terminal, and a transport layer protocol is the UDP protocol (refer to content of the first feedback message packet in a phase from the second NAT device to the first NAT device in Table 2).

In some embodiments, after receiving the first feedback message packet sent by the second NAT device, the first NAT device modifies a destination address (the destination IP address and the destination port number) of the first feedback message packet. Specifically, the first NAT device modifies the destination IP address from the external-network IP address corresponding to the terminal to the internal-network IP address of the terminal in the first network, and modifies the destination port number from the external-network port number corresponding to the terminal to the internal-network port number of the terminal in the first network (refer to content of the first feedback message packet in a phase from the first NAT device to the terminal in Table 2).

In some embodiments, the first router may generate the first feedback message by using the P2P L3 proxy service module in the first router, and send the first feedback message to the P2P L3 proxy client module in the terminal through the P2P channel between the terminal and the first router.

In some embodiments, after obtaining the internal-network address in the second network, the terminal may configure a new local TUN interface by using the P2P L3 proxy client module, and add a routing rule corresponding to the TUN interface to a network system module, so that the network system module can transmit data on a specified APP (for example, an AI Life APP) to the corresponding TUN interface according to the routing rule, and transmit traffic of the specified APP through the TUN interface.

After receiving a service request input by a user, the specified APP in the terminal may generate service request data in response to the service request initiated by the user, and transmit the service request data to the TUN interface by using the system network module. Then the service request data is transmitted to the P2P L3 proxy client through the TUN interface.

S503: The terminal generates a first packet based on the service request data.

For example, a message corresponding to the first packet may be a service request message, and is used to request a service from the service device cascaded to the first router.

In some embodiments, specific content of a 5-tuple of the first packet may include a source IP address, a destination IP address, a source port number, a destination port number, and a transport layer protocol. In this case, the specific content of the 5-tuple of the first packet may be as follows: The source IP address is the internal-network IP address of the terminal in the first network, the destination IP address is the external-network IP address corresponding to the first router, the source port number is the internal-network port number of the terminal in the first network, the destination port number is the external-network port number corresponding to the first router, and the transport layer protocol is the UDP protocol.

In some embodiments, a packet format of the first packet includes a first packet header and a first payload part (a UDP payload). The first packet header may further include a first IP header (used to write the source IP address, the destination IP address, and an identifier of the transport layer protocol) and a first UDP header (used to write the source port number and the destination port number). The first payload part is used to write a data body.

It should be understood that different from the conventional technology, in this embodiment of this application, the first payload part of the first packet is used to write a second packet, and the second packet is an internal-network packet of the second network. For example, specific content of a 5-tuple of the second packet may be as follows: A source IP address is the internal-network IP address of the terminal in the second network, a destination IP address is an internal-network IP address of the service device (for example, a service device supporting a Samba protocol) in the second network, a source port number is the internal-network port number of the terminal in the second network, a destination port number is an internal-network port number of the service device in the second network, and a transport layer protocol is the UDP protocol.

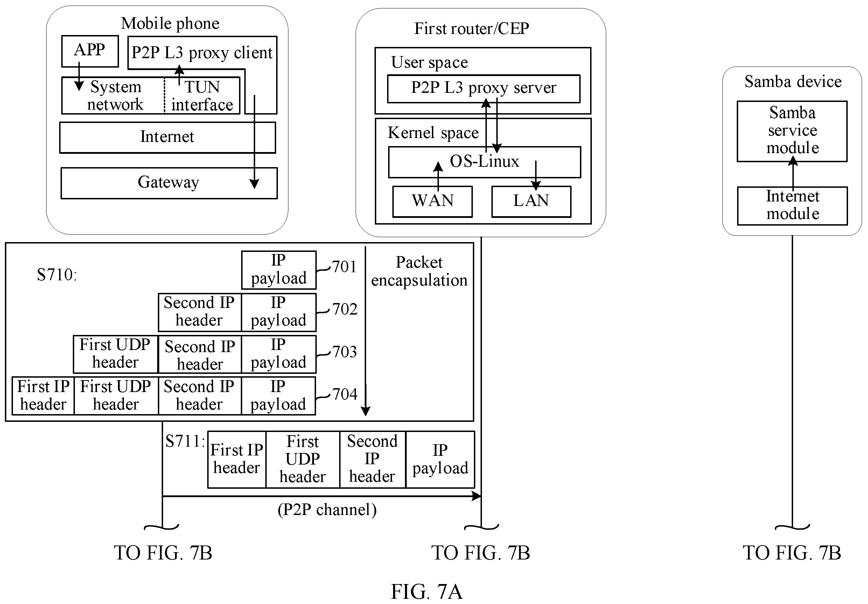

In some embodiments, a packet format of the second packet may include a second packet header and a second payload part. The second packet header may include a second IP header (used to write the source IP address, the destination IP address, and an identifier of the transport layer protocol of the second packet) and a second UDP header (used to write the source port number and the destination port number). The second payload part (corresponding to an IP payload shown in FIG. 7A and FIG. 7B) is used to write a data body, for example, service request data for requesting, by the terminal, the service device to provide some services, for example, service request data for photo sharing in the embodiment of FIG. 3G. The service request data may be used to request the service device to perform a corresponding service operation.

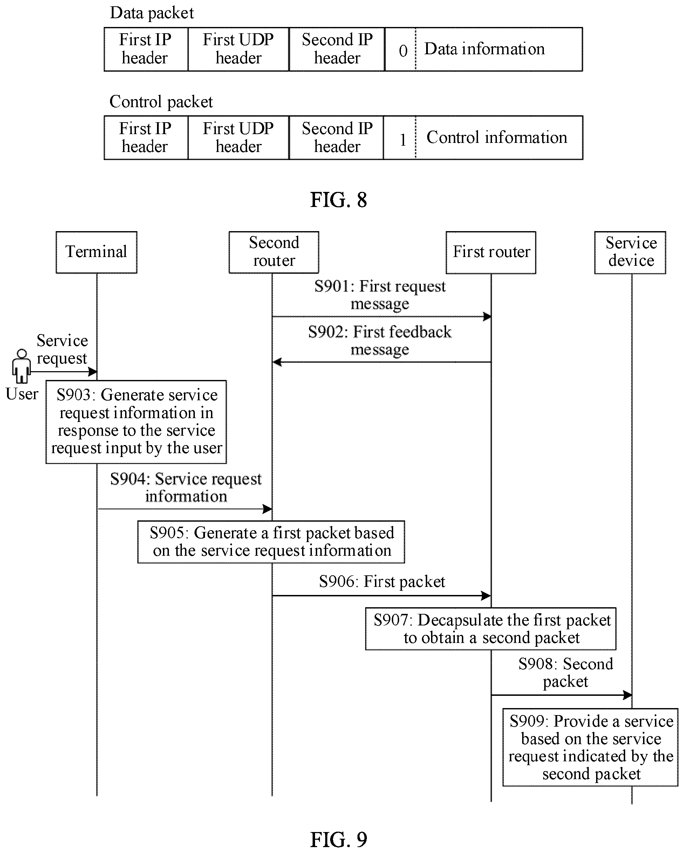

In some embodiments, identification information of a packet type may be further written into the second payload part of the second packet. For example, a number "0" is used on 1 byte (or 1 bit) to indicate that a corresponding packet is a data packet. Optionally, for a control packet, identification information of a packet type may be written into a packet payload part. For example, a number "1" is used on 1 byte (or 1 bit) to indicate that a corresponding packet is a control packet (as shown in FIG. 8). Alternatively, a number "1" may be used to indicate that a corresponding packet is a data packet, and a number "0" may be used to indicate that a corresponding packet is a control packet (not shown in FIG. 8). This is not limited in this application.

A process of generating the first packet and specific packet formats in different steps are described below with reference to FIG. 7A and FIG. 7B. Details are not described herein.

S504: The terminal sends the first packet to the first router.

With reference to the system architecture shown in FIG. 2A, for clearer understanding of specific content of different parts of the message packet in different phases in which the terminal accesses the service device, refer to Table 3. Table 3 shows specific content of a 5-tuple of a layer 3 packet and body data content of a packet payload of the layer 3 packet.

Similar to step S501, in some embodiments, the terminal first sends a first packet to the first NAT device. Specific content of a 5-tuple (a source IP address, a destination IP address, a source port number, a destination port number, and a transport layer protocol) of the first request message packet sent by the terminal to the first NAT device may be as follows: The source IP address is the internal-network IP address of the terminal in the first network, the destination IP address is the external-network IP address corresponding to the first router, the source port number is the internal-network port number of the terminal in the first network, the destination port number is the external-network port number corresponding to the first router, and the transport layer protocol is the UDP protocol (refer to content of the first packet in a phase from the terminal to the first NAT device in Table 3).

**Table 3**

| Different packet transmission phases and packets | IP header | UDP header | Packet payload |
|---|---|---|---|
| Content of a first packet in a phase from a terminal to a first NAT device | **Source IP address:** Internal-network IP address of the terminal in a first network | **Source port number:** Internal-network port number of the terminal in the first network | Body data: Second packet |
| | **Destination IP address:** External-network IP address corresponding to a first router | | |
| | | **Destination port number:** External-network port number corresponding to the first router | |
| | **Transport layer protocol:** Identifier of a UDP protocol | | |
| Content of a first packet in a phase from the first NAT device to a second NAT device | **Source IP address:** External-network IP address corresponding to the terminal | **Source port number:** External-network port number corresponding to the terminal | Body data: Second packet |
| | **Destination IP address:** External-network IP address corresponding to the first router | | |
| | | **Destination port number:** External-network port number corresponding to the first router | |
| | **Transport layer protocol:** Identifier of the UDP protocol | | |
| Content of a first packet in a phase from t ie second NAT device to the first router | **Source IP address:** External-network IP address corresponding to the terminal | **Source port number:** External-network port number corresponding to the terminal | Body data: Second packet |
| | **Destination IP address:** Internal-network IP address of the first router in a second network | | |
| | | **Destination port number:** Internal-network port number of the first router in the second network | |
| | **Transport layer protocol:** Identifier of the UDP protocol | | |
| Content of the second packet in a phase from the first router to a service device | **Source IP address:** Internal-network IP address of the terminal in the second network | **Source port number:** Internal-network port number of the terminal in the second network | Body data: Service request data |
| | **Destination IP address:** Internal-network IP address of the service device in the second network | | |
| | | **Destination port number:** Internal-network port number of the service device in the second network | |
| | **Transport layer protocol:** Identifier of the UDP protocol | | |

In some embodiments, after receiving the first packet, the first NAT device modifies a source address (the source IP address and the source port number) of the first packet. Specifically, the first NAT device modifies the source IP address from the internal-network IP address of the terminal in the first network to the external-network IP address corresponding to the terminal, and modifies the source port number from the source port number of the terminal in the first network to the external-network port number corresponding to the terminal.

Then the first NAT device may send a modified first packet to the second NAT device. In this case, specific content of a 5-tuple of the first packet may be as follows: A source IP address is the external-network IP address corresponding to the terminal, a destination IP address is the external-network IP address corresponding to the first router, a source port number is the external-network port number corresponding to the terminal, a destination port number is the external-network port number corresponding to the first router, and a transport layer protocol is the UDP protocol (refer to content of the first packet in a phase from the first NAT device to the second NAT device in Table 3).

In some embodiments, after receiving the first packet sent by the first NAT device, the second NAT device modifies a destination address (the destination IP address and the destination port number) of the first packet. Specifically, the second NAT device modifies the destination IP address from the external-network IP address corresponding to the first router to the internal-network IP address of the first router in the second network, and modifies the destination port number from the external-network port number corresponding to the first router to the internal-network port number of the first router in the second network (refer to content of the first packet in a phase from the second NAT device to the first router in Table 3).

Then the second NAT device sends a first packet obtained after modification by the second NAT device to the first router located in the second network.

S505: The first router decapsulates the first packet to obtain the second packet.

In some embodiments, the first router decapsulates the first packet by using the P2P L3 proxy service module to obtain the second packet.

In some embodiments, that the first router decapsulates the first packet may be stripping off the first packet header (the first IP header and the first UDP header) of the first packet to obtain the first payload part (namely, the second packet) of the first packet.

Then the first router may obtain a destination address based on the second packet header of the second packet, and send the second packet to a service device corresponding to the destination address.

S506: The first router sends the second packet to the service device.

In some embodiments, for content of the 5-tuple of the second packet and data content of the payload of the second packet, refer to content of the second packet in a phase from the first router to the service device in Table 3.

In some embodiments, the P2P L3 proxy client module in the first router sends the second packet to the corresponding service device based on the destination address carried in the second packet. For example, the destination address of the second packet may be an internal-network IP address of the tablet computer in the home network in FIG. 3.

In some embodiments, the first router sends the second packet to the corresponding service device through a LAN bridge between the first router and the service device in the second network.

S507: The service device provides a service based on a service request indicated by the second packet.

Specifically, after receiving the second packet, the service device decapsulates the second packet, and strips off the second packet header to obtain body data (service request data) in the payload part of the second packet. Then the service device provides a corresponding service based on the body data (the service request data).

In some embodiments, the service device includes a service module (for example, a Samba service module). The service module may decapsulate the second packet to obtain service request data content in the payload part of the second packet. The service module invokes another related module (for example, a processing module, a storage module, or a display module) of the service device by reading the service request data content, to provide a corresponding service. For example, the service request data content may be the photo sharing service in the embodiment of FIG. 3G.

According to the method for accessing a service device in a local area network provided in this embodiment of this application, the terminal in the external network obtains the internal-network address that is in the local area network in which the service device is located and that is assigned by the router to the terminal, uses the internal-network address as a source address of an internal-network packet, and uses the internal-network packet as a UDP packet payload. The terminal is communicatively connected to the service device through the UDP-based P2P channel between the terminal and the router and the LAN bridge between the router and the service device, so that the terminal in the external network can conveniently and efficiently perform remote access to or control on the service device in the local area network.

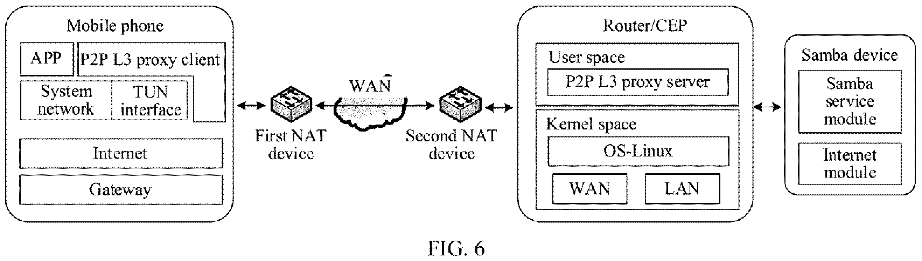

For better understanding of the method for accessing a service device in a local area network provided in embodiments of this application, the following describes an internal implementation process of a method for accessing a home network service provided in embodiments of this application with reference to FIG. 6 and FIG. 7A and FIG. 7B.

For example, FIG. 6 is a schematic diagram of structures of devices in the system architecture shown in FIG. 2A. The system architecture specifically includes a first NAT device, a second NAT device, a terminal (for example, a mobile phone) located behind the first NAT device, a first router located behind the second NAT device, and a service device (for example, a Samba device) cascaded to the first router.

Referring to FIG. 6, modules included in the mobile phone and functions of the modules are as follows:
In some embodiments, the mobile phone may include an APP module, a system network (system network) module, a TUN interface, a P2P L3 proxy client (P2P L3 proxy client) module, a gateway (gateway), and the like.

The APP module may be configured to implement interaction between the mobile phone and a user, for example, receive an operation that is input by the user and that indicates the service device to provide a service. For example, the APP module may be a system APP (for example, an AI Life APP) of the terminal, or may be a third-party APP. This is not limited in this application.

The system network module may be, for example, an APP network management module in an Android^{®} system, and is configured to assign and transmit data streams in different APPs to corresponding interfaces according to a preset routing rule. For example, in this embodiment of this application, after receiving a data stream of the AI Life APP, the system network module may send, according to a preset routing rule of a TUN interface, the data stream to the TUN interface corresponding to the AI Life APP.

The TUN interface is a new local interface configured by the P2P L3 proxy client module. The TUN interface is a virtual network adapter simulated by a system by using software. The TUN interface can send and receive a data packet by using a file (for example, a /dev/tun file) without using a network cable. For example, the TUN interface in this embodiment of this application may be connected to an APP by using a file such as a /dev/tun file. For example, the APP writes data into the /dev/tun file through system call, and then the data is transmitted to the TUN interface in a form of a network layer data packet. The terminal may further set an IP address and a routing rule for the TUN interface, and store the IP address and the routing rule of the TUN interface in the network system module, so that the network system module transmits data in a specified APP to a corresponding TUN interface.

The P2P L3 proxy client module is equivalent to a processing module, and may be configured to implement a plurality of functions, including generating a request for communication with the first router and communicating with a P2P L3 proxy service module in the router through a P2P channel; or configuring a new TUN interface for the terminal and setting a corresponding IP address and routing rule for the TUN interface; or encapsulating or decapsulating a packet of the terminal; or the like.

Referring to FIG. 6, modules included in the first router and functions of the modules are as follows:

In some embodiments, for example, the first router may support an OS-Linux system, and the OS-Linux system is divided into user space (user space) and kernel space (kernel space). The user space includes the P2P L3 proxy service module. The kernel space includes a wide area network WAN module, a LAN module, an OS-Linux system module, and the like.

The P2P L3 proxy service module may be configured to assign an internal-network address of a home network to the terminal in an external network, or may encapsulate or decapsulate a received packet sent by the terminal.

The WAN module includes a WAN communication interface, and is configured to communicate with a device in a wide area network, or communicate with a device in another external network through a wide area network.

The LAN module includes a LAN communication interface, and is configured to communicate with another device in a local area network.

Referring to FIG. 6, modules included in the Samba device and functions of the modules are as follows:
In some embodiments, the Samba device may include a Samba service (Samba service) module, an internet (Internet) module, and the like.

The Samba service module may be configured to invoke another module (for example, a storage module, a file transmission module, or a printing module) of the service device according to a request of another device, to provide a corresponding service.

The internet module may be used to communicate with a device in a same local area network as the internet module.

The following describes internal working procedures of the devices and an internal implementation process of packet encapsulation and decapsulation with reference to the modules of the devices shown in FIG. 6.

FIG. 7A and FIG. 7B are a schematic diagram of packet structures in a packet encapsulation and decapsulation process. Steps are as follows:
S710: A mobile phone generates a first packet.

With reference to arrow directions between modules in the mobile phone in FIG. 7A and FIG. 7B, a specific process in which the mobile phone generates the first packet is as follows: An APP (for example, an AI Life APP) in the mobile phone receives a service request operation input by a user. In response to the service request operation input by the user, the APP may generate corresponding service request data. Then the APP transmits the data to a system network module. The system network module determines, according to a stored routing rule, a TUN interface corresponding to the APP, further transmits the service request data to the TUN interface corresponding to the APP, and then sends the service request data to a P2P L3 proxy client module through the TUN interface. After receiving the service request data, the P2P L3 proxy client module may perform packet encapsulation on the data according to a UDP protocol, to obtain the first packet.

With reference to a format change of a packet 701 to a packet 704 in step S710, a specific process in which the P2P L3 proxy client module performs packet encapsulation is as follows: The P2P L3 proxy client module uses the received service request data as a payload of a second packet (also referred to as the payload of the second packet or an IP payload). In this case, a packet structure is shown by the packet 701 in S710. Then the P2P L3 proxy client module adds a second IP header to the IP payload to obtain the second packet. In this case, a packet structure is shown by a packet 702. It can be learned that a structure of the second packet (the packet 702) includes the second IP header and the IP payload. A source IP address of the second packet, a destination IP address of the second packet, an identifier of the UDP protocol, and the like may be written into the second IP header. The source IP address is an internal-network IP address of the terminal in a second network, and the destination IP address is an internal-network IP address of a service device in the second network. The IP payload includes the service request data. The service request data may be used to request the service device to provide a related service, for example, service operations of receiving and storing a photo.

It should be understood that the IP payload of the second packet herein may further include a second UDP header (not shown in FIG. 7A and FIG. 7B) of the second packet. The second UDP header includes a source port number and a destination port number of the second packet. The source port number is an internal-network port number of the terminal in the second network, and the destination port number is an internal-network port number of the service device in the second network.

It should be further understood that the second packet may be transmitted by a first router in the second network to the service device through a LAN bridge of the second network, and both a source address and a destination address of the second packet are internal-network addresses in the second network. Therefore, the second packet may also be referred to as an internal-network packet of the second network.

Then the P2P L3 proxy client module in the mobile phone adds a first UDP header to the second packet. In this case, a packet structure is shown by a packet 703 in S710. The first UDP header may include a source port number and a destination port number of the first packet. The source port number is a port number of the mobile phone in a first network, and the destination port number is an external-network port number corresponding to the first router. The source port number and the destination port number are used to provide a peer to peer interface.

Then the P2P L3 proxy client module in the mobile phone adds a first IP header to the current packet (the packet 703 in S710) to generate the first packet. In this case, a packet format is shown by the packet 704 in S710. The first IP header and the first UDP header may be collectively referred to as a first packet header or a packet header of the first packet. The first IP header may include a source IP address and a destination IP address of the first packet. The source IP address is an IP address of the terminal in the first network, and the destination IP address is an external-network IP address corresponding to the first router.

It can be learned from the foregoing process that the mobile phone first generates the second packet, and then encapsulates the second packet into a first payload part of the first packet. The second packet may be used for transmission between devices in the second network, and may also be referred to as an internal-network packet of the second network herein. The second IP header and UDP header are used for transmission at a network layer and a transport layer. Therefore, the second packet may also be referred to as an external-network packet. Optionally, the external network herein may be a WAN.

It should be understood that the packet in this embodiment of this application may be a UDP packet generated according to the UDP protocol. Because the packet sent by the mobile phone to the service device may be a data packet or a control packet, to distinguish between the two different types of packets, as shown in FIG. 8, 1 byte (or 1 bit) may be used in the payload part (the IP payload) of the second packet to indicate a type of the current packet. For example, as shown in FIG. 8, "0" may be used to indicate that a currently transmitted packet is a data packet, and in this case, the IP payload part includes data information; and "1" may be used to indicate that a currently transmitted packet is a control packet, and in this case, the IP payload part includes control information. Alternatively, "1" may be used to indicate that a currently transmitted packet is a data packet, and in this case, the IP payload part includes data information; and "0" may be used to indicate that a currently transmitted packet is a control packet, and in this case, the IP payload part includes control information (not shown in FIG. 8). This is not limited in this application.

S711: The mobile phone sends the first packet to the first router through a P2P channel.

Step S711 corresponds to step S504 in the embodiment of FIG. 5. Specifically, the P2P L3 proxy client module transmits the packet 704 (namely, the first packet) to the first router in the second network through the P2P channel between the mobile phone and the first router by using an internet module and a gateway (gateway) in the terminal.

S712: The first router receives the first packet, and decapsulates the first packet to obtain the second packet.

Step S712 corresponds to step S505 in the embodiment of FIG. 5.

With reference to arrow directions between modules in the first router in FIG. 7A and FIG. 7B, the first router may receive the first packet (as shown by the packet 704 in S712) by using a WAN module. Then the WAN module transmits the first packet to a P2P L3 proxy service module in user space (user space) by using an OS-Linux module. After receiving the first packet, the P2P L3 proxy service module decapsulates the first packet to obtain the second packet (as shown by the packet 702 in 712).

With reference to a format change of the packet 704 to the packet 702 shown in step S712, a process in which the first router decapsulates the first packet is as follows: The P2P L3 proxy service module in the first router first strips off the first IP header of the first packet (the packet 704 in S712) to obtain the packet 703 in S712. Then the first UDP header is stripped off to obtain the second packet (the packet 702 in S712). The P2P L3 proxy service module may obtain the destination IP address of the second packet based on the second IP header of the second packet (the packet 702 in S712). Optionally, if the IP payload includes the UDP header, the P2P L3 proxy service module may further obtain the destination port number of the second packet by parsing the second UDP header (not shown) included in the IP payload.

S713: The first router sends the second packet to a Samba device through the LAN bridge.

Step S713 corresponds to step S506 in the embodiment of FIG. 5.

In some embodiments, the first router sends the second packet to the corresponding service device (Samba device) based on the destination address (the destination IP address and the destination port number of the second packet) included in the second packet. For example, the first router may send the second packet to the Samba device through the LAN bridge. For example, the Samba device may be the tablet computer located in the home network in FIG. 3.

S714: The Samba device decapsulates the second packet.

Step S714 corresponds to step S507 in the embodiment of FIG. 5.

With reference to arrow directions between modules in the Samba device in FIG. 7A and FIG. 7B, an internet module in the Samba device receives the second packet (the packet 702). Then the internet module transmits the second packet to a Samba service module. The Samba service module decapsulates the second packet to obtain content (the packet 701 in S714) of the payload of the second packet, and performs, based on the service request data in the payload, an operation indicated by the user.

With reference to a format change of the packet 702 to the packet 701 shown in step S714, after obtaining the second packet (the packet 702 in S714), the Samba service module may strip off the second IP header of the packet 702 to obtain the IP payload (the packet 701) of the second packet. Optionally, if the IP payload includes a UDP header, the Samba service module may further strip off the UDP header in the IP payload to obtain body data of the service request, and perform a corresponding service operation based on the request service data content to provide a corresponding service.

It should be understood that when the service device sends a reverse data packet to the terminal, encapsulation and decapsulation manners similar to those in the foregoing process may also be used. Details are not described herein again.

According to the method for accessing a service device in a local area network provided in this embodiment of this application, the internal-network address of the home network is assigned to the terminal in the external network, and an internal-network packet of a home is transmitted as a payload of the P2P channel, so that convenient communication between the terminal and the service device in the internal network can be implemented. In this way, the terminal can efficiently access and control the service device to provide a corresponding service, so that user experience is improved

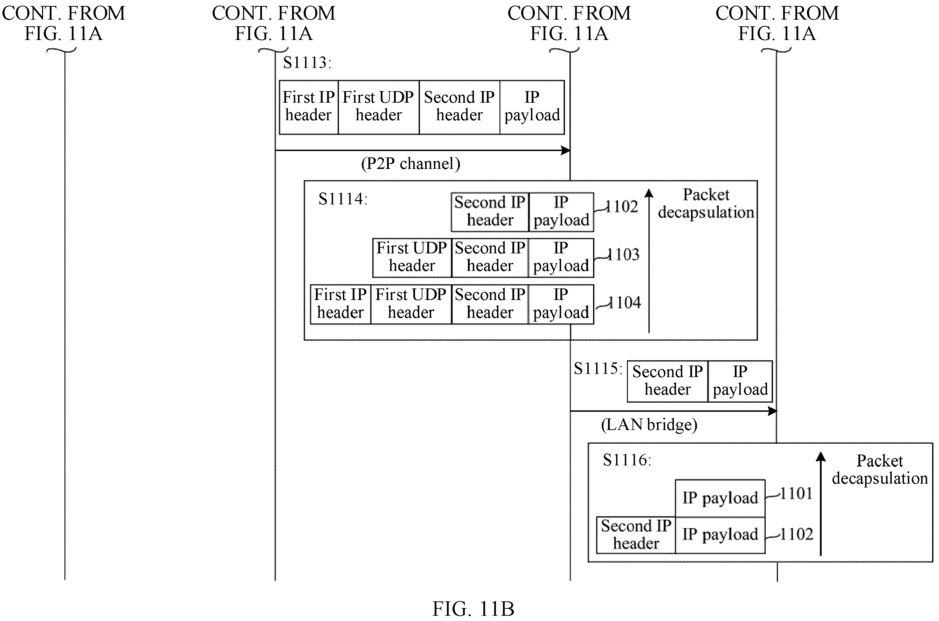

For example, the process of Phase 2 performed based on the system architecture in FIG. 2B is described below with reference to FIG. 9 to FIG. 11A and FIG. 11B. Compared with the system architecture shown in FIG. 2A, in the system architecture shown in FIG. 2B, a second router obtains an internal-network address (also referred to as a communication address in a second network) of the second router in the second network, and the second router performs an operation of generating a first packet. However, in the system architecture shown in FIG. 2A, a terminal obtains an internal-network address (also referred to as a communication address in a second network) of the terminal in the second network, and the terminal generates a first packet.

FIG. 9 is a schematic diagram of a multi-end interaction process in the system architecture shown in FIG. 2B. A terminal and a second router in the embodiment of FIG. 9 are located in a first network, the terminal is a device cascaded to the second router, and the terminal and the second router are located behind a first NAT device. A first router and a service device are located in a second network, the service device is a device cascaded to the first router, and the first router and the service device are located behind a second NAT device. The process may include the following steps.

S901: The second router sends a first request message to the first router.

The first request message is used to request an internal-network address in the second network from the first router. The internal-network address in the second network may be an internal-network IP address in the second network, or an internal-network IP address in the second network and an internal-network port number in the second network.

With reference to the system architecture shown in FIG. 2B, for clearer understanding of specific content of the first request message packet in different phases in which the terminal sends the first request message to the first router, refer to Table 4. Table 4 shows specific content of a 5-tuple of the first request message packet and body data content of a packet payload of the first request message packet in step S901 in the embodiment of FIG. 9.

**Table 4**

| Different packet transmission phases and packets | IP header | UDP header | Packet payload |
|---|---|---|---|
| Content of a first request message packet in a phase from a second router to a first NAT device | **Source IP address:** Internal-network IP address of the second router in a first network | **Source port number:** Internal-network port number of the second router in the first network | Body data: Request data for requesting the first router to assign an internal-network address in a second network to the second router |
| | **Destination IP address:** External-network IP address corresponding to a first router | | |
| | | **Destination port number:** External-network port number corresponding to the first router | |
| | **Transport layer protocol:** Identifier of a UDP protocol | | |
| Content of a first request message packet in a phase from the first NAT device to a second NAT device | **Source IP address:** External-network IP address corresponding to the second router | **Source port number:** Externa -network port number corresponding to the second router | Body data: Request data for requesting the first router to assign the internal-network address in the second network to the second router |
| | **Destination IP address:** External-network IP address corresponding to the first router | | |
| | | **Destination port number:** External-network port number corresponding to the first router | |
| | **Transport layer protocol:** Identifier of the UDP protocol | | |
| Content of a first request message packet in a phase from the second NAT device to the first router | **Source IP address:** External-network IP address corresponding to the second router | **Source port number:** Externa -network port number corresponding to the second router | Body data: Request data for requesting the first router to assign the internal-network address in the second network to the second router |
| | **Destination IP address:** Internal-network IP address of the first router in the second network | | |
| | | **Destination port number:** Internal-network port number of the first router in the second router | |
| | **Transport layer protocol:** Identifier of the UDP protocol | | |

In some embodiments, the second router may first send a first request message to the first NAT device. Specific content of a 5-tuple (a source IP address, a destination IP address, a source port number, a destination port number, and a transport layer protocol) of the first request message packet sent by the second router to the first NAT device may be as follows: The source IP address is an internal-network IP address of the second router in the first network, the destination IP address is an external-network IP address corresponding to the first router, the source port number is an internal-network port number of the second router in the first network, the destination port number is an external-network port number corresponding to the first router, and the transport layer protocol is a UDP protocol (refer to content of the first request message packet in a phase from the second router to the first NAT device in Table 4).

In some embodiments, after receiving the first request message packet, the first NAT device modifies a source address (the source IP address and the source port number) of the first request message packet. Specifically, the first NAT device modifies the source IP address from the internal-network IP address of the second router in the first network to an external-network IP address corresponding to the second router, and modifies the source port number from the source port number of the second router in the first network to an external-network port number corresponding to the second router.

Then the first NAT device may send a modified first request message packet to the second NAT device. In this case, specific content of a 5-tuple of the first request message packet may be as follows: A source IP address is the external-network IP address corresponding to the second router, a destination IP address is the external-network IP address corresponding to the first router, a source port number is the external-network port number corresponding to the second router, a destination port number is the external-network port number corresponding to the first router, and a transport layer protocol is the UDP protocol (refer to content of the first request message packet in a phase from the first NAT device to the second NAT device in Table 4).

In some embodiments, after receiving the first request message packet sent by the first NAT device, the second NAT device modifies a destination address (the destination IP address and the destination port number) of the first request message packet. Specifically, the second NAT device modifies the destination IP address from the external-network IP address corresponding to the first router to an internal-network IP address of the first router in the second network, and modifies the destination port number from the external-network port number corresponding to the first router to an internal-network port number of the first router in the second network (refer to content of the first request message packet in a phase from the second NAT device to the first router in Table 4).

Then the second NAT device sends the first request message packet obtained after modification by the second NAT device to the first router located in the second network.

It should be understood that only the system architecture shown in FIG. 2B is used as an example for the packet content changes shown in this embodiment. In some embodiments, if there is a further device (for example, a NAT device) between the terminal and the first router, content (a source address or a destination address) of the packet changes accordingly. This is not limited in this application.

In some embodiments, the first router assigns the corresponding internal-network address in the second network to the second router based on the first request message.

S902: The first router sends a first feedback message to the second router.

The first feedback message is used to indicate the internal-network address of the second router in the second network, and the internal-network address in the second network is the internal-network address assigned by the first router to the second router in the second network.

With reference to the system architecture shown in FIG. 2B, for clearer understanding of specific content of the first feedback message packet in different phases in which the first router sends the first feedback message to the second router, refer to Table 5. Table 5 shows specific content of a 5-tuple of the first feedback message packet and body data content of a packet payload of the first feedback message packet in step S902 in the embodiment of FIG. 9.

In some embodiments, the first router first sends a first feedback message to the second NAT device. Specific content of a 5-tuple of the first feedback message packet sent by the first router to the second NAT device may be as follows: A source IP address is the internal-network IP address of the first router in the second network, a destination IP address is the external-network IP address corresponding to the second router, a source port number is the internal-network port number of the first router in the second network, a destination port number is the external-network port number corresponding to the second router, and a transport layer protocol is the UDP protocol (refer to content of the first feedback message packet in a phase from the first router to the second NAT device in Table 4).

In some embodiments, after receiving the first feedback message packet, the second NAT device modifies a source address (the source IP address and the source port number) of the first feedback message packet. Specifically, the second NAT device modifies the source IP address from the internal-network IP address of the first router in the second network to the external-network IP address corresponding to the first router, and modifies the source port number from the source port number of the first router in the second network to the external-network port number corresponding to the first router.

**Table 5**

| Different packet transmission phases and packets | IP header | UDP header | Packet payload |
|---|---|---|---|
| Content of a first feedback message packet in a phase from a first router to a second NAT device | **Source IP address:** Internal-network IP address of the first router in a second network | **Source port number:** Internal-network port number of the first router in the second network | Body data: Internal-network address that is in the second network and that is assigned by the first router to the second router |
| | **Destination IP address:** External-network IP address corresponding to a second router | | |
| | | **Destination port number:** External-network port number corresponding to the second router | |
| | **Transport layer protocol:** Identifier of a UDP protocol | | |
| Content of a first feedback message packet in a phase from the second NAT device to a first NAT device | **Source IP address:** External-network IP address corresponding to the first router | **Source port number:** External-network port number corresponding to the first router | Body data: Internal-network address that is in the second network and that is assigned by the first router to the second router |
| | **Destination IP address:** External-network IP address corresponding to the second router | | |
| | | **Destination port number:** External-network port number corresponding to the second router | |
| | **Transport layer protocol:** Identifier of the UDP protocol | | |
| Content of a first feedback message packet in a phase from the first NAT device to the second router | **Source IP address:** External-network IP address corresponding to the first router | **Source port number:** External-network port number corresponding to the first router | Body data: Internal-network address that is in the second network and that is assigned by the first router to the second router |
| | **Destination IP address:** Internal-network IP address of the second router in a first network | | |
| | | **Destination port number:** Internal-network port number of the second router in the first network | |
| | **Transport layer protocol:** Identifier of the UDP protocol | | |

Then the second NAT device may send a modified first feedback message packet to the first NAT device. In this case, specific content of a 5-tuple of the first feedback message packet may be as follows: A source IP address is the external-network IP address corresponding to the first router, a destination IP address is the external-network IP address corresponding to the second router, a source port number is the external-network port number corresponding to the first router, a destination port number is the external-network port number corresponding to the second router, and a transport layer protocol is the UDP protocol (refer to content of the first feedback message packet in a phase from the second NAT device to the first NAT device in Table 5).

In some embodiments, after receiving the first feedback message packet sent by the second NAT device, the first NAT device modifies a destination address (the destination IP address and the destination port number) of the first feedback message packet. Specifically, the first NAT device modifies the destination IP address from the external-network IP address corresponding to the second router to the internal-network IP address of the second router in the first network, and modifies the destination port number from the external-network port number corresponding to the second router to the internal-network port number of the second router in the first network (refer to content of the first feedback message packet in a phase from the first NAT device to the second router in Table 5).

In some embodiments, the first NAT device sends a first feedback message to the second router.

S903: The terminal generates service request information in response to a service request input by a user.

In some embodiments, after receiving a service request operation input by the user, the terminal may generate the service request information, and send the service request information to the second router. The service request information may include service request data.

S904: The terminal sends the service request information to the second router.

Optionally, the terminal may send the service request information to the second router through a PLAN bridge of the first network.

In some embodiments, specific content of a 5-tuple (a source IP address, a destination IP address, a source port number, a destination port number, and a transport layer protocol) of the service request information packet may be as follows: The source IP address is an internal-network IP address of the terminal in the first network, the destination IP address is the internal-network IP address of the second router in the first network, the source port number is an internal-network port number of the terminal in the first network, the destination port number is the internal-network port number of the second router in the first network, and the transport layer protocol is the UDP protocol (refer to content of the service request information packet in a phase from the terminal to the second router in Table 6).

**Table 6**

| Different packet transmission phases and packets | IP header | UDP header | Packet payload |
|---|---|---|---|
| Content of a service request information packet in a phase from a terminal to a second NAT device | **Source IP address:** Internal-network IP address of the terminal in a first network | **Source port number:** Internal-network port number of the terminal in the first network | Body data: Service request data |
| | **Destination IP address:** Internal-network IP address of a second router in the first network | | |
| | | **Destination port number:** Internal-network port number of the second router in a second network | |
| | **Transport layer protocol:** Identifier of a UDP protocol | | |

S905: The second router generates a first packet based on the service request information.

In some embodiments, the second router obtains the service request data based on the service request information, and generates the first packet based on the service request data.

With reference to the system architecture shown in FIG. 2B, for clearer understanding of specific content of different parts of the message packet in different phases in which the terminal accesses the service device, refer to the following Table 7. Table 7 shows specific content of a 5-tuple of a layer 3 packet and body data content of a packet payload of the layer 3 packet.

In some embodiments, specific content of a 5-tuple of the first packet may include a source IP address, a destination IP address, a source port number, a destination port number, and a transport layer protocol. In this case, the specific content of the 5-tuple of the first packet may be as follows: The source IP address is the internal-network IP address of the second router in the first network, the destination IP address is the external-network IP address corresponding to the first router, the source port number is the internal-network port number of the second router in the first network, the destination port number is the external-network port number corresponding to the first router, and the transport layer protocol is the UDP protocol (refer to content of the first packet in a phase from the second router to the first NAT device in Table 7).

In some embodiments, a packet format of the first packet includes a first packet header and a first payload part (a UDP payload). The first packet header may further include a first IP header (used to write the source IP address, the destination IP address, and an identifier of the transport layer protocol) and a first UDP header (used to write the source port number and the destination port number). The first payload part is used to write a data body.

**Table 7**

| Different packet transmission phases and packets | IP header | UDP header | Packet payload |
|---|---|---|---|
| Content of a first packet in a phase from a second router to a first NAT device | **Source IP address:** Internal-network IP address of the second router in a first network | **Source port number:** Internal-network port number of the second router in the first network | Body data: Second packet |
| | **Destination IP address:** External-network IP address corresponding to a first router | **Destination port number:** External-network port number corresponding to the first router | |
| | **Transport layer protocol:** Identifier of a UDP protocol | | |
| Content of a first packet in a phase from the first NAT device to a second NAT device | **Source IP address:** External-network IP address corresponding to the second router | **Source** p**ort number:** Externa -network port number corresponding to the second router | Body data: Second packet |
| | **Destination IP address:** External-network IP address corresponding to the first router | **Destination port number:** External-network port number corresponding to the first router | |
| | **Transport layer protocol:** Identifier of the UDP protocol | | |
| Content of a first packet in a phase from the second NAT device to the first router | **Source IP address:** External-network IP address corresponding to the second router | **Source port number:** External-network port number corresponding to the second router | Body data: Second packet |
| | **Destination IP address:** Internal-network IP address of the first router in a second network | | |
| | | **Destination port number:** Internal-network port number of the first router in the second network | |
| | **Transport layer protocol:** Identifier of the UDP protocol | | |
| Content of the second packet in a phase from the first router to a service device | **Source IP address:** Internal-network IP address of the second router in the second network | **Source port number:** Internal-network port number of the second router in the second network | Body data: Service request data |
| | **Destination IP address:** Internal-network IP address of the service device in the second network | | |
| | | **Destination port number:** Internal-network port number of the service device in the second network | |
| | **Transport layer protocol:** Identifier of the UDP protocol | | |

It should be understood that different from the conventional technology, in this embodiment of this application, the first payload part of the first packet is used to write a second packet, and the second packet is an internal-network packet of the second network. For example, specific content of a 5-tuple of the second packet may be as follows: A source IP address is the internal-network IP address of the second router in the second network, a destination IP address is an internal-network IP address of the service device (for example, a service device supporting a Samba protocol) in the second network, a source port number is the internal-network port number of the second router in the second network, a destination port number is an internal-network port number of the service device in the second network, and a transport layer protocol is the UDP protocol.

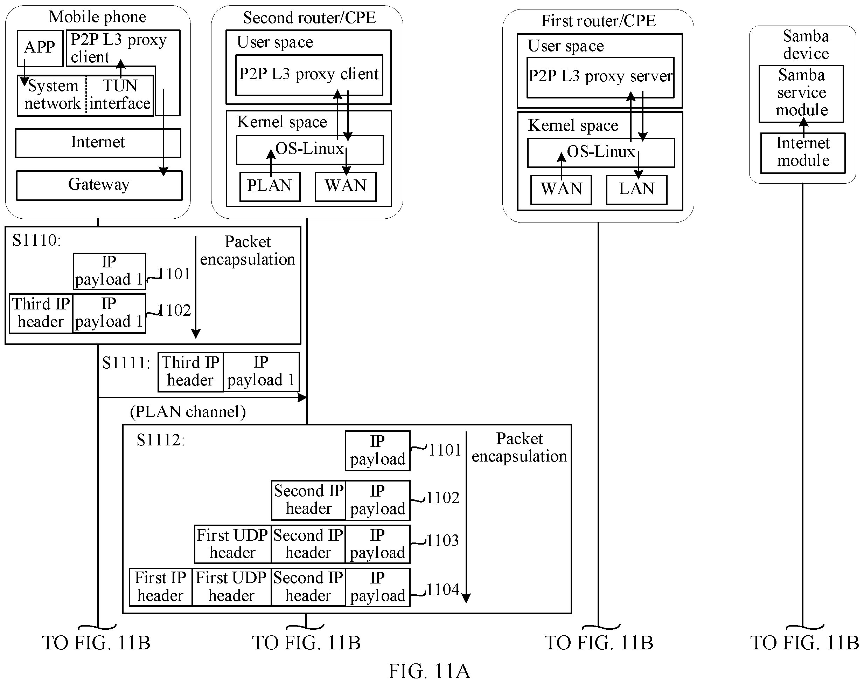

In some embodiments, a packet format of the second packet may include a second packet header and a second payload part. The second packet header may include a second IP header (used to write the source IP address, the destination IP address, and an identifier of the transport layer protocol of the second packet). The second payload part (corresponding to an IP payload shown in FIG. 11A and FIG. 11B) is used to write a data body, for example, service request data for requesting, by the terminal, the service device to provide some services, for example, service request data for photo sharing in the embodiment of FIG. 3G. The service request data may be used to request the service device to perform a corresponding service operation. In addition, the second payload part (corresponding to the IP payload in FIG. 11A and FIG. 11B) may further include a second UDP header (used to write the source port number and the destination port number).

In some embodiments, identification information of a packet type may be further written into the second payload part of the second packet. For example, a number "0" is used on 1 byte (or 1 bit) to indicate that a corresponding packet is a data packet. Optionally, for a control packet, identification information of a packet type may be written into a packet payload part. For example, a number "1" is used on 1 byte (or 1 bit) to indicate that a corresponding packet is a control packet. Alternatively, a number "0" may be used to indicate that a corresponding packet is a data packet, and a number "1" may be used to indicate that a corresponding packet is a control packet. This is not limited in this application.

A process of generating the first packet and specific packet formats in different steps are described below with reference to FIG. 11A and FIG. 11B. Details are not described herein.

S906: The second router sends the first packet to the first router.

Similar to step S901, in some embodiments, the second router first sends a first packet to the first NAT device. Specific content of a 5-tuple (a source IP address, a destination IP address, a source port number, a destination port number, and a transport layer protocol) of the first request message packet sent by the second router to the first NAT device may be as follows: The source IP address is the internal-network IP address of the second router in the first network, the destination IP address is the external-network IP address corresponding to the first router, the source port number is the internal-network port number of the second router in the first network, the destination port number is the external-network port number corresponding to the first router, and the transport layer protocol is the UDP protocol (refer to content of the first packet in a phase from the second router to the first NAT device in Table 7).

In some embodiments, after receiving the first packet, the first NAT device modifies a source address (the source IP address and the source port number) of the first packet. Specifically, the first NAT device modifies the source IP address from the internal-network IP address of the second router in the first network to the external-network IP address corresponding to the second router, and modifies the source port number from the source port number of the second router in the first network to the external-network port number corresponding to the second router.

Then the first NAT device may send a modified first packet to the second NAT device. In this case, specific content of a 5-tuple of the first packet may be as follows: A source IP address is the external-network IP address corresponding to the second router, a destination IP address is the external-network IP address corresponding to the first router, a source port number is the external-network port number corresponding to the second router, a destination port number is the external-network port number corresponding to the first router, and a transport layer protocol is the UDP protocol (refer to content of the first packet in a phase from the first NAT device to the second NAT device in Table 7).

In some embodiments, after receiving the first packet sent by the first NAT device, the second NAT device modifies a destination address (the destination IP address and the destination port number) of the first packet. Specifically, the second NAT device modifies the destination IP address from the external-network IP address corresponding to the first router to the internal-network IP address of the first router in the second network, and modifies the destination port number from the external-network port number corresponding to the first router to the internal-network port number of the first router in the second network (refer to content of the first packet in a phase from the second NAT device to the first router in Table 7).

Then the second NAT device sends a first packet obtained after modification by the second NAT device to the first router located in the second network.

S907: The first router decapsulates the first packet to obtain the second packet.

For content of the 5-tuple of the second packet and content of the payload of the second packet, refer to content of the second packet in a phase from the first router to the service device in Table 7.

In some embodiments, the first router decapsulates the first packet by using a P2P L3 proxy service module to obtain the second packet.

In some embodiments, that the first router decapsulates the first packet may be stripping off the first packet header (the first IP header and the first UDP header) of the first packet to obtain the first payload part (namely, the second packet) of the first packet.

Then the first router may obtain a destination address based on the second packet header of the second packet, and send the second packet to a service device corresponding to the destination address.

S908: The first router sends the second packet to the service device.

In some embodiments, a P2P L3 proxy client module in the first router sends the second packet to the corresponding service device based on the destination address carried in the second packet. For example, the destination address of the second packet may be an internal-network address of the tablet computer in the home network in FIG. 3.

In some embodiments, the first router sends the second packet to the corresponding service device through a LAN bridge between the first router and the service device in the second network.

S909: The service device provides a service based on a service request indicated by the second packet.

Specifically, after receiving the second packet, the service device decapsulates the second packet, and strips off the second packet header to obtain body data (service request data) in the payload part of the second packet. Then the service device provides a corresponding service based on the body data (the service request data).

In some embodiments, the service device includes a service module (for example, a Samba service module). The service module may decapsulate the second packet to obtain service request data content (for example, a packet 1101 shown in FIG. 11A and FIG. 11B) in the payload part of the second packet. The service module invokes another related module (for example, a processing module, a storage module, or a display module) of the service device by reading the service request data content, to provide a corresponding service. For example, the service request data content may correspond to the photo sharing service in the embodiment of FIG. 3G.

It should be understood that in this embodiment of this application, a P2P channel is established between the second router and the first router. The second router may be considered as a client, the first router may be considered as a server, and layer 3 packet proxy forwarding may be performed between the first router and the second router by using the P2P channel.

According to the method for accessing a service device in a local area network provided in this embodiment of this application, the second router in the external network obtains the internal-network address that is in the local area network in which the service device is located and that is assigned by the router to the second router, uses the internal-network address as a source address of an internal-network packet, and uses the internal-network packet as a UDP packet payload. The second router is communicatively connected to the service device through the UDP-based P2P channel between the second router and the router and the LAN bridge between the router and the service device, so that the second router and the service device in the home network can conveniently and efficiently perform remote access to each other.

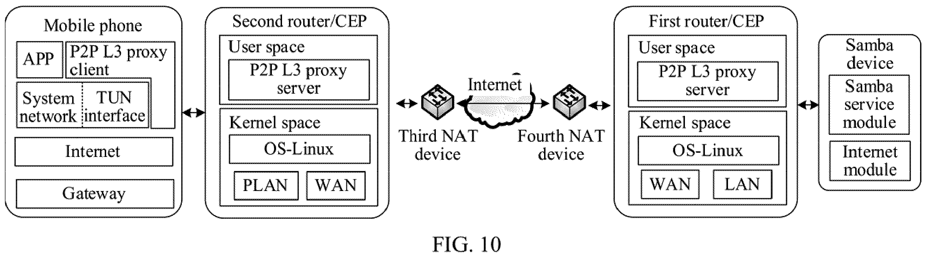

For better understanding of the method for accessing a service device in a local area network provided in embodiments of this application, the following describes an internal implementation process of a method for accessing a home network service provided in embodiments of this application with reference to FIG. 10 and FIG. 11A and FIG. 11B.

For example, FIG. 10 is a schematic diagram of software structures of devices in the system architecture shown in FIG. 2B. The devices in the system architecture may correspond to corresponding devices in the system architecture shown in FIG. 2B, and specifically include a first NAT device, a second NAT device, a terminal (for example, a mobile phone) and a second router that are located behind the first NAT device, a first router located behind the second NAT device, and a service device (for example, a Samba device) cascaded to the first router.

For modules included in the devices in the architecture shown in FIG. 10 and functions of the modules, refer to related descriptions in FIG. 6. For brevity of description, only a difference between the system architecture in FIG. 10 and the system architecture in FIG. 6 is described herein.

With reference to the system architecture in FIG. 2B and the diagram of multi-end interaction shown in FIG. 9, it can be learned that in the system architecture in FIG. 10, the terminal may receive a service request input by a user, and then the second router interacts with the first router and the service device in a second network.

Referring to FIG. 10, modules included in the second router and functions of the modules are as follows:
In some embodiments, for example, the second router in this embodiment of this application may support an OS-Linux system, and the OS-Linux system is divided into user space (user space) and kernel space (kernel space). The user space includes a P2P L3 proxy service module. The kernel space includes a proxy local area network (proxy LAN, PLAN) module, a WAN module, an OS-Linux system module, and the like.

The P2P L3 proxy service module may be configured to assign an internal-network address of a first network to the terminal, or may encapsulate or decapsulate a received packet sent by the terminal.

The WAN module includes a WAN communication interface, and is configured to communicate with a device (for example, the first NAT device) in a wide area network, or communicate with a device in another external network through a wide area network.

The PLAN module may be a special virtual access point (virtual access point, VAP) started by the second router. The VAP can provide a same function as a physical entity access point, for example, provide a wireless access service for the mobile phone.

With reference to FIG. 10, the following describes an internal implementation process of packet encapsulation and decapsulation in a process of accessing a service device in a local area network in the system architecture. For example, FIG. 11A and FIG. 11B are a schematic diagram of packet structures in a packet encapsulation and decapsulation process.

Referring to FIG. 11A and FIG. 11B, step S1110 is performed on a mobile phone side: A mobile phone generates a service request information packet.

In some embodiments, a user may input a service request by using an APP (for example, an AI Life APP) in the mobile phone. Then the mobile phone generates the service request information based on service request data.

Specifically, for a format and content of the service request information packet, refer to Table 6. Specific content of a 5-tuple is as follows: A source IP address is an internal-network IP address of the terminal in a first network, a destination IP address is an internal-network IP address of a second router in the first network, a source port number is an internal-network port number of the terminal in the first network, a destination port number is an internal-network port number of the second router in the first network, and a transport layer protocol is a UDP protocol.

In some embodiments, a format of the service request information packet may include a third IP header and a payload part IP payload 1 (for example, a packet 1102 in S1110), and the payload part of the service request information may include service request data.

With reference to arrow directions between modules in the mobile phone in FIG. 11A and FIG. 11B, a specific process in which the mobile phone generates the service request information packet is as follows: An APP in the mobile phone receives a service request input by a user, and generates corresponding service request data. Then the APP transmits the data to a system network module. The system network module further transmits, based on a TUN interface corresponding to the APP, the data to the TUN interface, and sends the data to a P2P L3 proxy client module through the TUN interface. After receiving the service request data, the P2P L3 proxy client module may perform packet encapsulation on the data according to the UDP protocol, to obtain the service request information packet.

With reference to a format change of a packet 1101 to the packet 1102 in FIG. 11A and FIG. 11B, a specific process in which the mobile phone encapsulates the service request information includes: The mobile phone encapsulates the service request data into the UDP payload part (the IP payload 1), as shown by the packet 1101 in S1110. Then the third IP header is added to the IP payload 1, as shown by the packet 1102 in S1110. Optionally, the IP payload may further include a UDP header of the service request packet.

It should be understood that modules and functions of the mobile phone in this embodiment are merely examples. In some embodiments, a module generating the service request information packet may be different from the mobile phone module in the embodiment of FIG. 11A and FIG. 11B. This is not limited in this application.

Step S1111: The mobile phone sends the service request information packet to the second router.

Step S1111 may correspond to step S904 in FIG. 9. Optionally, the terminal may send the service request information to the second router through a PLAN bridge of the first network.

Step 1112: The second router generates a first packet based on the service request information.

Step S1112 may correspond to step S905 in FIG. 9.

With reference to arrow directions between modules in the second router in FIG. 11A and FIG. 11B, a specific process in which the second router generates the second packet is as follows: A PLAN module in the second router receives the service request information sent by the mobile phone, and transmits the service request information to a P2P proxy client (P2P L3 proxy client) in user space by using an OS-Linux module. The P2P L3 proxy client module decapsulates the service request information packet to obtain the service request data in the payload of the service request packet. Then the P2P L3 proxy client module encapsulates the service request data into a payload part of a second packet, and then encapsulates the second packet into the payload part of the first packet, to generate the first packet.

With reference to a packet format change of the packet 1101 to a packet 1104 in step S1112, a specific process in which the P2P L3 proxy client module performs packet encapsulation is as follows: The P2P L3 proxy client module uses the received service request data as the payload (the IP payload) of the second packet. In this case, a packet structure is shown by the packet 1101 in S1112. Then the P2P L3 proxy client module adds a second IP header to the IP payload to obtain the second packet. In this case, a packet structure of the second packet is shown by the packet 1102 in S1112. It can be learned that the structure of the second packet (the packet 1102) includes the second IP header and the IP payload. A source IP address of the second packet, a destination IP address of the second packet, an identifier of the UDP protocol, and the like may be written into the second IP header. The source IP address is an internal-network IP address of the second router in a second network, and the destination IP address is an internal-network IP address of a service device in the second network. The IP payload includes the service request data. The service request data may be used to request the service device to provide a related service, for example, service operations of receiving and storing a photo.

Optionally, the IP payload of the second packet herein may further include a second UDP header (not shown) of the second packet. The second UDP header includes a source port number and a destination port number of the second packet. The source port number is an internal-network port number of the second router in the second network, and the destination port number is an internal-network port number of the service device in the second network.

It should be further understood that the second packet may be transmitted by a router in the second network to the service device through a LAN bridge of the second network, and both a source address and a destination address of the second packet are internal-network addresses in the second network. Therefore, the second packet may also be referred to as an internal-network packet of the second network.

Then the P2P L3 proxy client module in the second router adds a first UDP header to the second packet. In this case, a packet structure is shown by a packet 1103 in S1112. The first UDP header may include a source port number and a destination port number of the first packet. The source port number is a port number of the second router in the first network, and the destination port number is an external-network port number corresponding to the first router. The source port number and the destination port number are used to provide a peer to peer interface.

Then the P2P L3 proxy client module in the second router adds a first IP header to the current packet (the packet 1103 in S1112) to generate the first packet. In this case, a packet format is shown by the packet 1104 in S1112. The first IP header and the first UDP header may be collectively referred to as a first packet header or a packet header of the first packet. The first IP header may include a source IP address and a destination IP address of the first packet. The source IP address is an IP address of the terminal in the first network, and the destination IP address is an external-network IP address corresponding to the first router.

It can be learned from the foregoing process that the second router first generates the second packet, and then encapsulates the second packet into a first payload part of the first packet. The second packet may be used for transmission between devices in the second network, and may also be referred to as an internal-network packet of the second network herein. The second IP header and UDP header are used for transmission at a network layer and a transport layer. Therefore, the second packet may also be referred to as an external-network packet. Optionally, the external network herein may be a WAN.

Step S1113: The second router sends the first packet to the first router through a P2P channel.

Step S1113 corresponds to step S906 in the embodiment of FIG. 9. Specifically, the P2P L3 proxy client module transmits the packet 1104 (namely, the first packet) to the first router in the second network through the P2P channel between the second router and the first router by using an internet module and a gateway (gateway) in the second router.

Step S1114: The first router receives the first packet, and decapsulates the first packet to obtain the second packet.

Step S1114 may correspond to step S907 in FIG. 9. With reference to arrow directions between modules in the first router in FIG. 11A and FIG. 11B, the first router may receive the first packet (as shown by the packet 1104 in S1114) by using a WAN module. Then the WAN module transmits the first packet to a P2P L3 proxy service module in user space (user space) by using an OS-Linux module. After receiving the first packet, the P2P L3 proxy service module decapsulates the first packet to obtain the second packet (as shown by the packet 1102 in S1114).

With reference to a format change of the packet 1104 to the packet 1102 shown in step S1112, a process in which the first router decapsulates the first packet is as follows: The P2P L3 proxy service module in the first router first strips off the first IP header and the first UDP header of the first packet (the packet 1104 in S1114) to obtain the second packet (the packet 1102 in S1114). Then the P2P L3 proxy service module may obtain the destination IP address of the second packet based on the second IP header of the second packet (the packet 1102 in S1114). Optionally, if the IP payload of the second packet includes the second UDP header (not shown in FIG. 11A and FIG. 11B), the P2P L3 proxy service module may further obtain the destination port number of the second packet by parsing the second UDP header included in the IP payload.

Step S1115: The first router sends the second packet to a Samba device through the LAN bridge.

Step S1115 may correspond to step S908 in FIG. 9.

In some embodiments, the first router sends the second packet to the corresponding service device (Samba device) based on the destination address (the destination IP address and the destination port number of the second packet) included in the second packet. For example, the first router may send the second packet to the Samba device through the LAN bridge. For example, the Samba device may be the tablet computer located in the home network in FIG. 3.

Step S1116: The Samba device decapsulates the second packet to obtain the service request data.

Step S1116 may correspond to step S909 in FIG. 9.

With reference to arrow directions between modules in the Samba device in FIG. 11A and FIG. 11B, an internet module in the Samba device receives the second packet (the packet 1102). Then the internet module transmits the second packet to a Samba service module. The Samba service module decapsulates the second packet to obtain content (the packet 1101 in S1116) of the payload of the second packet, and performs, based on the service request data in the payload, an operation indicated by the user.

With reference to a format change of the packet 1102 to the packet 1101 shown in step S1116, after obtaining the second packet (the packet 1102), the Samba service module may strip off the second IP header of the packet 1102. Optionally, if the IP payload of the second packet includes the second UDP header, the Samba service module may further strip off the second UDP header to obtain body data (namely, the service request data) of the second packet, and perform a corresponding service operation based on the request service data content to provide a corresponding service.

It should be understood that when the service device sends a reverse data packet to the terminal, encapsulation and decapsulation manners similar to those in the foregoing process may also be used. Details are not described herein again.

According to the method for accessing a service device in a local area network provided in this embodiment of this application, the internal-network address of the home network is assigned to the terminal in the external network, and an internal-network packet of a home is transmitted as a payload of the P2P channel, so that convenient communication between the terminal and the service device in the internal network can be implemented. In this way, the terminal can efficiently access and control the service device to provide a corresponding service, so that user experience is improved

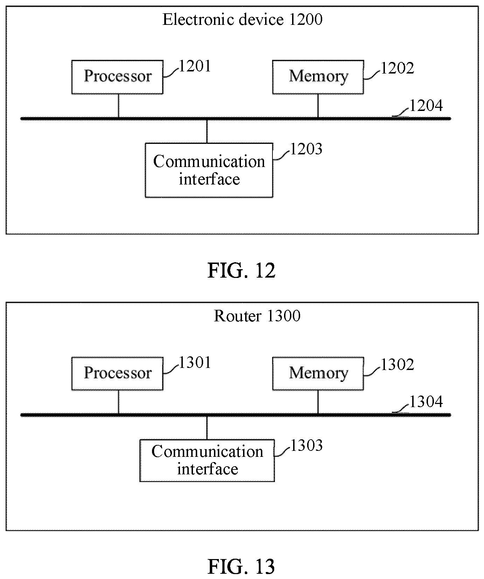

For example, as shown in FIG. 12, an embodiment of this application further provides an electronic device 1200 for accessing a service device in a local area network. The electronic device 1200 includes one or more processors 1201, one or more memories 1202, one or more communication interfaces 1203, and one or more computer programs. The one or more programs are stored in the memory 1202, and the processor 1201, the memory 1202, and the communication interface 1203 are connected to each other through a bus 1204. The bus 1204 may be a PCI bus, an EISA bus, or the like. The bus 1204 may be classified into an address bus, a data bus, a control bus, and the like. For ease of representation, only one bold line is used to represent the bus in FIG. 12, but this does not mean that there is only one bus or only one type of bus.

In some embodiments, when the one or more programs are executed by the processor 1201, the device is enabled to perform the following steps: obtaining a communication address of the electronic device in a second network; generating a first packet based on the communication address of the electronic device in the second network, where a first payload part of the first packet includes a second packet, a source address of the second packet is the communication address of the electronic device in the second network, and a destination address of the second packet is a communication address of at least one service device; and sending the first packet to a first router.

In some embodiments, when the one or more programs are executed by the processor 1201, the device is enabled to perform the following steps: sending, by the electronic device, a first request message to the first router, where the first request message is used to request the communication address of the electronic device in the second network; and receiving a first feedback message sent by the first router, where the first feedback message is used to indicate the communication address of the electronic device in the second network.

In some embodiments, a second payload part of the second packet includes service request data, the service request data is used to request a service from the at least one service device, and when the one or more programs are executed by the processor 1201, the electronic device is enabled to perform the following steps: obtaining the service request data; generating the second packet based on the service request data; and encapsulating the second packet to generate the first packet.

In some embodiments, when the electronic device is a terminal used for interacting with a user, and the one or more programs are executed by the processor 1201, the electronic device is enabled to perform the following steps: receiving a service request operation input by the user; and obtaining the service request data based on the service request operation.

In some embodiments, when the electronic device is a second router, and the one or more programs are executed by the processor 1201, the electronic device is enabled to perform the following step: receiving the service request data sent by a terminal, where the terminal is used for interacting with a user.

For example, FIG. 13 is a schematic diagram of a structure of a router for accessing a service device in a local area network according to an embodiment of this application. The router 1300 includes one or more processors 1301, one or more memories 1302, one or more communication interfaces 1303, and one or more computer programs. The one or more programs are stored in the memory 1302, and the processor 1301, the memory 1302, and the communication interface 1303 are connected to each other through a bus 1304. The bus 1304 may be a PCI bus, an EISA bus, or the like. The bus 1304 may be classified into an address bus, a data bus, a control bus, and the like. For ease of representation, only one bold line is used to represent the bus in FIG. 13, but this does not mean that there is only one bus or only one type of bus.

When the one or more programs are executed by the processor 1301, the router 1300 is enabled to perform the following steps: receiving a first packet sent by an electronic device, where a first payload part of the first packet includes a second packet, a source address of the second packet is a communication address of the electronic device in a second network, and a destination address of the second packet is a communication address of at least one service device in the second network; decapsulating the first packet to obtain the second packet; and sending the second packet to the at least one service device.

In some embodiments, when the one or more programs are executed by the processor 1301, the router is enabled to perform the following steps: receiving a first request message sent by the electronic device, where the first request message is used to request the communication address of the electronic device in the second network; assigning the communication address in the second network to the electronic device based on the first request message; and sending a first feedback message to the electronic device, where the first feedback message is used to indicate the communication address of the electronic device in the second network.

In some embodiments, a second payload part of the second packet includes service request data, and the service request data is used to request a service from the at least one service device.

In some embodiments, the first network and the second network are local area networks, and the first network is different from the second network.

An embodiment of this application further provides a computer-readable storage medium. The computer-readable storage medium stores a computer program, and when the computer program runs on a computer, the computer is enabled to implement the foregoing method for accessing a service device in a local area network.

An embodiment of this application further provides a computer product. The computer product stores a computer program, and when the computer program runs on a computer, the computer is enabled to implement the foregoing method for accessing a service device in a local area network.

An embodiment of this application further provides a communication system for accessing a service device in a local area network. The communication system includes an electronic device, a first router, and at least one service device cascaded to the first router. The electronic device is located in a first network, the first router and the at least one service device are located in a second network, there is a P2P channel between the electronic device and the first router, the P2P channel is used for communication between the electronic device and the first router, the electronic device is configured to implement functions of the terminal or the second router in the method for accessing a service device in a local area network described above, and the first router is configured to implement functions of the first router in the method for accessing a service device in a local area network described above.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or transmitted by using the computer-readable storage medium. The computer instructions may be transmitted from a website, computer, server, or data center to another website, computer, server, or data center in a wired manner (for example, by using a coaxial cable, an optical fiber, or a digital subscriber line) or in a wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like.

A person of ordinary skill in the art may understand that all or some of the procedures in the foregoing embodiments may be implemented by a computer program instructing relevant hardware. The program may be stored in a computer-readable storage medium. When the program is executed, the procedures in the foregoing method embodiments may be performed. The foregoing storage medium includes any medium that can store program code, such as a ROM, a random access memory RAM, a magnetic disk, or an optical disc.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A method for accessing a service device in a local area network, applied to an electronic device, wherein the electronic device is located in a first network, there is a P2P channel between the electronic device and a first router located in a second network, the P2P channel is used for communication between the electronic device and a first router, at least one service device is cascaded to the first router, and the method comprises:
sending a first request message to the first router, wherein the first request message is used to request a communication address of the electronic device in the second network;
receiving a first feedback message sent by the first router, wherein the first feedback message is used to indicate the communication address of the electronic device in the second network; and
accessing the at least one service device by using the communication address of the electronic device in the second network.

2. The method according to claim 1, wherein the accessing the at least one service device by using the communication address of the electronic device in the second network comprises:
generating a first packet based on the communication address of the electronic device in the second network, wherein a first payload part of the first packet comprises a second packet, a source address of the second packet is the communication address of the electronic device in the second network, and a destination address of the second packet is a communication address of the at least one service device; and
sending the first packet to the first router.

3. The method according to claim 2, wherein a source address of the first packet is a communication address of the electronic device in the first network, and a destination address of the first packet is a communication address of the first router in the second network.

4. The method according to any one of claims 1 to 3, wherein a second payload part of the second packet comprises service request data, the service request data is used to request a service from the at least one service device, and the method further comprises:
obtaining the service request data;
generating the second packet based on the service request data; and
encapsulating the second packet to generate the first packet.

5. The method according to claim 4, wherein when the electronic device is a terminal used for interacting with a user, the obtaining the service request data specifically comprises:
receiving a service request operation input by the user; and
obtaining the service request data based on the service request operation.

6. The method according to claim 4, wherein when the electronic device is a second router, the receiving the service request data specifically comprises:
receiving the service request data sent by a terminal, wherein the terminal is used for interacting with a user.

7. The method according to any one of claims 1 to 6, wherein the method further comprises:
receiving a communication address that is of the service device in the second network and that is input by the user.

8. The method according to any one of claims 1 to 7, wherein the first network and the second network are local area networks, and the first network is different from the second network.

9. A method for accessing a service device in a local area network, applied to a first router, wherein the first router is located in a second network, at least one service device is cascaded to the first router, there is a P2P channel between the first router and an electronic device located in a first network, the P2P channel is used for communication between the first router and the electronic device, and the method comprises:
receiving a first request message sent by the electronic device, wherein the first request message is used to request a communication address of the electronic device in the second network;
assigning the communication address in the second network to the electronic device based on the first request message; and
sending a first feedback message to the electronic device, wherein the first feedback message is used to indicate the communication address of the electronic device in the second network.

10. The method according to claim 9, wherein the method further comprises:
receiving a first packet sent by the electronic device, wherein a first payload part of the first packet comprises a second packet, a source address of the second packet is the communication address of the electronic device in the second network, and a destination address of the second packet is a communication address of the at least one service device;
decapsulating the first packet to obtain the second packet; and
sending the second packet to the at least one service device based on the destination address of the second packet.

11. The method according to claim 10, wherein a source address of the first packet is a communication address of the electronic device in the first network, and a destination address of the first packet is a communication address of the first router in the second network.

12. The method according to any one of claims 9 to 11, wherein a second payload part of the second packet comprises service request data, and the service request data is used to request a service from the at least one service device.

13. The method according to any one of claims 9 to 12, wherein the first network and the second network are local area networks, and the first network is different from the second network.

14. An electronic device for accessing a service device in a local area network, comprising:
one or more processors;
one or more memories;
one or more communication interfaces; and
one or more computer programs, wherein the one or more programs are stored in the memory, and when the one or more programs are executed by the processor, the device is enabled to implement the method for accessing a service device in a local area network according to any one of claims 1 to 8.

15. A router for accessing a service device in a local area network, comprising:
one or more processors;
one or more memories;
one or more communication interfaces; and
one or more computer programs, wherein the one or more programs are stored in the memory, and when the one or more programs are executed by the processor, the router is enabled to implement the method for accessing a service device in a local area network according to any one of claims 9 to 13.

16. A computer-readable storage medium, wherein the computer-readable storage medium comprises a computer program or instructions, and when the computer program or the instructions are run on a computer, the computer is enabled to implement the method for accessing a service device in a local area network according to any one of claims 1 to 13.

17. A chip, comprising a processor and a memory, wherein the memory stores a computer program or instructions, and when the processor executes the computer program or the instructions, the method for accessing a service device in a local area network according to any one of claims 1 to 13 is implemented.
